# EUROPEAN PATENT SPECIFICATION

(11) **EP 4 238 313 B1**
(45) Date of publication and mention of the grant of the patent: **06.03.2024**
(21) Application number: 22798307.9
(22) Date of filing: 03.10.2022
(51) Int. Cl.: H04Q 9/00, H04L 67/12

(54) **METHOD, DEVICE AND SYSTEM FOR MONITORING PERISHABLE PRODUCTS**
VERFAHREN, VORRICHTUNG UND SYSTEM ZUR ÜBERWACHUNG VON VERDERBLICHEN PRODUKTEN
PROCÉDÉ, DISPOSITIF ET SYSTÈME DE SURVEILLANCE DE PRODUITS PÉRISSABLES

(30) Priority: 04.10.2021 CH 0703432021
(43) Date of publication of application: 06.09.2023
(60) Divisional application: 23178494.3
(73) Proprietor: Berlinger & Co. AG, 9608 Ganterschwil (CH)
(72) Inventor: SCHELL, Roger, 9650 Nesslau (CH); WEBER, Manuel, 5400 Baden (CH); BEER, Marina, 6883 Au (AT); VAN HOESEL, Lodewijk, 9608 Ganterschwil (CH)
(74) Representative: Frei Patent Attorneys
(86) International application number: PCT/EP2022/077427
(87) International publication number: WO 2023/057363

(56) References cited:
- EP-A1- 2 975 587
- WO-A2-01/37507
- US-A1- 2015 188 671
- US-A1- 2017 098 374
- US-A1- 2018 139 568
- US-A1- 2020 322 703

## Description

The invention relates to the field of monitoring products, in particular of monitoring products which are sensitive to physical and/or environmental conditions, such as pharmaceutical products. More specifically, it relates to the monitoring of the integrity (intactness / soundness) of products using tags (such as data loggers). In particular, the invention relates to monitoring a set of products, such as a set of products which are transported together or a set of products which are stored together. The monitoring can take place, e.g., during said transporting and during said storing, respectively.

The invention relates to methods and systems according to the opening clauses of the claims. It can find application, e.g., in cold chain monitoring.

From EP3017402 is known a tag (data logger) for monitoring the integrity of a product in a syringe. The tag comprises a display unit comprising a display for displaying data relating to said integrity.

US 2018/139568 A1 discloses a communication terminal including a communication unit configured to transmit first information to a relay apparatus (gateway) that receives information transmitted from a plurality of communication terminals and transmits the received information to a server and including a determination unit configured to determine a transmission timing of second information transmitted by the communication unit after transmission of the first information on the basis of a communication state of the relay apparatus at the time of transmission of the first information.

In an embodiment of said US 2018/139568 A1, when an acknowledgement of transmitted sensor information has not been received even after a lapse of a predetermined time period since transmission of the sensor information toward the gateway, the determination unit controls the communication unit so as to transmit the sensor information again. In this case, the determination unit starts another measurement of a time period using the timer. In a case where the acknowledgement has not been received even after retransmission of the sensor information by a predetermined number of times, the determination unit discards the sensor information and thereafter conducts another measurement to obtain further sensor information.

US 2017/098374 A1 describes a system for aggregation and distribution of parking data comprising parking sensors located proximate a parking area and one or more gateway devices as well as a cloud service component receiving parking sensor data indicating occupancy and turnover from the gateway devices. The cloud service component comprises a database for storing the parking sensor data and a software.

US 2015/188671 A1 concerns lossless data transmission in a wireless sensor network. A method is described which comprises collecting data via a wireless sensor node; attaching a timestamp to the collected data; buffering the collected data and the timestamp to a memory device; transmitting the collected data and the timestamp to a base station during a predetermined time slot; and retransmitting the collected data where the sensor node fails to receive an acknowledgement message from the base station after the data transmission.

US 2020/322703 A1 discloses a method for execution by a monitoring data analysis system which includes receiving a plurality of measurement data from a gateway device, each indicating a measurement generated by one of a plurality of multi-sensor units. A set of measurement entries are generated based on the measurement data, and the set of measurement entries is added to a measurement database. Processed measurement data can be received by a data packet generator module which then generates a plurality of data packets for transmission to the gateway device. The data packets can include timestamps and/or time window data for each raw and/or processed measurement and can indicate which sensor device collected each raw and/or processed measurement in the data packet.

In EP 2 975 587 A1 is described that a monitoring center device receives and collects sensing data sent from sensor terminals through relay devices. Acknowledgements are not considered in said EP 2 975 587 A1.

WO 01/37507 A2 describes a method of carrying out a transaction involving transmission of data over a link between a mobile terminal and a gateway. The data is in the form of a plurality of data messages wherein each message comprises at least one data packet. In case a message has a length exceeding a threshold value (maximum transfer unit), the message is segmented into a sequence of data packets of suitable length. After transmission and rececption of the data packets of the sequence, they are re-assembled.

It can be advantageous to communicate to the internet measurement data comprising data related to sensed physical and/or environmental conditions to which a product (presumably) has been exposed, as generated by a corresponding sensor-bearing tag; in particular one can do so already during the monitoring, such as during the transporting or the storing of the product.

This way, the sensing data can be saved in a well-defined and safe location, such as in a server system connected to the internet. Accordingly, sensing data from the tag, which have been transmitted to the internet and the server system, respectively, are preserved, even in case of, e.g., of loss of the tag.

And access can be provided to the sensing data from virtually anywhere, and in particular from locations remote from the product. This way, it is not necessary to be close to the tag and the product, respectively, in order to learn about the integrity of the product. It is, in this way, possible to practically realize real-time monitoring.

Also, this makes possible, in a simple fashion, to extend the monitoring (and optionally also the processing / evaluating) in such a way that one and the same product (or set of products) can be (centrally) monitored even if different systems and/or devices are used at different times, such as at an initital storage, during a subsequent transport and during a final storage.

And an analysis concerning specific transport lanes or specific storage locations can be accomplished in a relatively simple way, such as by gathering data from two or more different systems and/or devices which happen to be simultaneously in use on the same transport lane or in the same storage location. And also, an evaluation over time of a specific transport lane or specific storage location can be readily made this way.

And it is also possible to interrelate the sensing data with further data, such as with data relating to the weather and/or to traffic (road; water; air).

Furthermore, processing of the sensing data, such as for evaluation of the sensing data, e.g., for determining whether or not the product can be assumed to be still intact or not, can be accomplished "in the cloud", i.e. using a server system connected to the internet. This way, such data processing not necessarily has to be accomplished by the tag itself, such that it can be constructed in a simpler and more cost-effective way. And also the tag's power consumption can be lower, such that the tag's energy source (e.g., battery) can be smaller dimensioned.

Thus, it makes sense to contemplate a tag comprising one or more sensors and having internet connectivity for transmitting to the internet sensing data comprising data related to the physical and/or environmental conditions sensed by the one or more sensors.

This way, the advantages sketched above can be achieved. And it is furthermore sufficient to use (and manufacture) a single type of tags only - at least when disregarding possible demands for different sensors in different tags.

However, the inventors thought further and contemplated an improved way of monitoring products, more particularly, of monitoring a set of products. They contemplated that it can be advantageous to use two different types of devices for monitoring a set of products, wherein a device of a first type (first device) comprises a sensing unit (comprising one or more sensors) and a device of a second type (second device) has internet connectivity - in contrast to the first device. And a first device can communicate with a second device - via a communication network (first communication network) which is different from the communication network providing the internet connectivity (second communication network). This way, many first devices can communicate data, such as sensing data originating from their respective sensing unit, via a second device to the internet. Accordingly, the first devices can be relatively small and cost-efficient, since they can be devoid of hardware and of software for transmitting data to the internet.

Thus, instead of using many devices having a sensor unit and internet connectivity, it is proposed to introduce first and second device, wherein the first devices can communicate - via a first communication network, such as according to a "Bluetooth Low-Energy" standard -with second devices; and only the second devices can transmit data to the internet - via a second communication network, such as according to a "WiFi" standard or using a cellular communication network. The second devices each can function as a gateway to the internet for one or more of the first devices.

In particular when many products have to be separately monitored or when otherwise several sensors need to be located in different locations of the set of products, the proposed use of a large number of the relatively simple first devices together with a small number of second devices can be a very cost-effective way of monitoring the set of products.

This can make possible an improved handling of data related to sensing results and to sensing data, respectively.

And it can make possible to enable communication, in particular transmission, of data from a first device beyond a range over which the first device itself can communicate.

However, the inventors still thought further, contemplating a still further improved way of monitoring products, more particularly, of monitoring a set of products. In particular, they identified that it can be useful and important to suitably handle acknowledgements of transmitted sensing data. They contemplated devices (in particular first devices), systems and methods which, in addition to the above, can be one or more of: robust versus network communication problems and some other technical problems; particularly tamper-proof; energy-saving, such as in the sense of reducing the amount of network communication required; advantageous with respect to the significance or value of the data finally received server system.

Accordingly:
An example of a possible advantage of a version of the invention is to make possible a secure handling of data related to sensing results.

An example of a possible advantage of a version of the invention is to make possible a reliable handling of data related to sensing results.

Another example of a possible advantage of a version of the invention is to enable communication, in particular transmission, of data from a first device beyond a range over which the first device itself can communicate.

Another example of a possible advantage of a version of the invention is to enable a particularly cost-effective way of monitoring products.

Another example of a possible advantage of a version of the invention is to make possible a particularly tamper-proof handling of data related to sensing results.

Another example of a possible advantage of a version of the invention is to handle sensing data in such a way sensing data received by a server system enable an improved evaluation, in particular enable a final decision about a product integrity at an early point in time. Especially, the evaluation can be improved in that sense that it can be based on a complete (gap-less) series of sensing data and/or enables to yield a final result.

Another example of a possible advantage of a version of the invention is to externally safeguard sensing data in a new way, e.g., in a particularly resource-efficient way.

Another example of a possible advantage of a version of the invention is to make possible a handling of data related to sensing results which reduces network traffic and/or reduces the number of transmissions which are necessary.

Another example of a possible advantage of a version of the invention is to make possible a particularly energy-efficient handling of data related to sensing results.

Another example of a possible advantage of a version of the invention is to handle sensing data in a particularly robust way, in particular by reducing an influence network communication problems and/or technical failures would have on the handling.

Another example of a possible advantage of a version of the invention is to handle sensing data in such a way that externally safeguarded sensing data, in particular sensing data received by a server system, are of especially high significance or value.

Further objects and advantages emerge from the description and embodiments above and below.

At least one of these objects or these advantages is at least partially achieved by systems and methods according to the patent claims.

Important points of the invention already become manifest in the first device which however is not separately claimed but constitutes a part of the claimed system. For example in particular as follows:
The first device for monitoring one or more products, such as a subset of products, comprises first functional units, wherein the first functional units comprise
   - a first sensing unit comprising a sensor for sensing physical and/or environmental conditions to which the one or more products are assumed to be exposed;
   - a first storage unit for data storage; and
   - a first communication unit for communicating via a first communication network.
The first device can furthermore be configured
   - to repeatedly carry out a sensing step in which said physical and/or environmental conditions are sensed using the sensor; and
   - for each of the sensing steps, to store in the first storage unit
      - sensing data indicative of a result of the respective sensing;
      - time data indicative of a sensing time associated with the respective sensing data; and
      - status data indicative of a transmission status of the respective sensing data.

The status data can be used for bookkeeping purposes facilitating advantageous handling of the sensing data, in particular when deciding which of these data shall be transmitted at what time.

The first device can furthermore be configured to, repeatedly, prepare and subsequently conduct a transmission via the first communication network, wherein in each of the transmissions, a first data set is transmitted via the first communication network. And each of the first data sets can comprise
- transmission ID data identifying the respective transmission;
- first ID data identifying the first device;
- one or more of the sensing data; and
- for each of the one or more sensing data: the respective associated time data.

The transmission ID data can facilitate the acknowledgement process. Disturbances in network communication often results in delay or even loss of transmissions. The transmission ID data can make possible to effectively track each transmission.

The first ID data can simplify routing in the network communication, e.g., in order to enable targeted and/or selective transmissions, which can avoid superfluous transmissions. The first ID data can furthermore make the data handling more secure. As is clear from the above, the sensing data are stored in the first storage unit.

The first device can furthermore be configured
- to store in the first storage unit, for each of the transmissions and upon conducting the respective transmission, the transmission ID, data associated with the respective transmission; and
- to link the stored transmission ID data to each of the respective sensing data comprised in the first data set transmitted in the respective transmission.

This can simplify the acknowledgement process by enabling a simple and clear identification of sensing data that have been transmitted in a specific transmission.

The first device can furthermore be configured
- to receive acknowledgement data sets via the first communication network, each of the acknowledgement data sets comprising transmission ID data identifying one of the transmissions conducted by the first device.

This way, each acknowledgement data set bears information revealing which transmission shall be acknowledged by it.

And the first device can furthermore be configured
- to set the transmission status of sensing data to "ready" upon storing the respective sensing data in the first storage unit; and
- to set the transmission status of sensing data to "acknowledged" upon receiving an acknowledgement data set via the first communication network which comprises transmission ID data linked to the respective sensing data.

This way, it can be distinguished between sensing data which have not been acknowledged and sensing data which have been acknowledged, i.e. which have been received, e.g., by a server system connected to the internet. The acknowledged ones need not be transmitted another time.

The described first device can enable secure handling of sensing data in a resource-efficient way.

In particular, the status data can be used in preparing the transmissions, more particularly in selecting sensing data. More specifically, the preparing of the transmission can be carried out in dependence of the status data.

For example, in the preparation of the transmissions, sensing data having a transmission status of "acknowledged" can be excluded when selecting sensing data to be included in the first data set from the sensing data stored in the first storage unit.

In some embodiments, one or more of the first data sets comprises notification data indicative of one or more notifications of the first device. This way, each first device can provide further information, e.g., to the server system. For example, it can notify, e.g., the server system, of problems and/or endangering situations for the monitored product(s) of which the first device became aware.

In some embodiments, one or more of the first data sets comprises error data indicative of one or more errors of the first device. This way, each first device can report, e.g., to the server system, any error it detected, such that its battery is low or that the sensor is defect.

In some embodiments, one or more of the acknowledgement data sets comprises command data indicative of one or more commands to be executed by the first device. This way, commands can be transmitted to the first device, e.g., from the server system. For example, when for some reason, the first device shall discontinue sensing and transmitting, a corresponding command can be transmitted to the first device, so that it can, in response, discontinue sensing and transmitting.

In some embodiments, the first device can be configured to execute the one or more commands upon reception of an acknowledgement data set comprising command data.

There is a first aspect to the invention, which is related to the allocation of sensing data to transmissions. It is related to a way of controlling the order of arrival of sensing data, such as of their arrival at a server system connected to the internet. In particular, said controlling of the order shall work also in case of technical problems, such as in case of network disturbances, such as when a second device to which the first device has transmitted a first data set cannot communicate via the second communication network for some time, or when the second device has some malfunction, such as does not function at all due to drained battery power.

The inventors contemplated that it can be very valuable to find a way to ensure, also under difficult circumstances, e.g., in case of technical problems such as those described above, that sensing data arrive, e.g., at said server system, in a particular order related to their respective associated sensing times. More specifically, the inventors contemplated that it would be very valuable to accomplish that whenever sensing data arrive, e.g., at the server system, one can be sure that there are, stored in the respective first device having sent the sensing data, no further sensing data which did not yet arrive (at the server system) and which are older than the newest one of the arrived sensing data.

At any time, one can be sure that the sensing data which have arrived, e.g., at the server system, are complete up to the newest ones. Thus, at any time, it is possible to make a final judgement regarding the integrity of the products monitored by the first device up to the time of the newest arrived sensing data. In other words, there is no ambiguity regarding the integrity (up to the sensing time of the newest received sensing data) - which however could be the case otherwise, such as when it would be possible that relatively old sensing data arrive later than relatively new sensing data.

Still put differently: It can be ensured that, in the internet and on the server system, respectively, a complete (gap-free) set of sensing data is available already at a very early time. And moreover, it can be ensured that at the time of reception of a first data set by the server system, there exist no sensing data of the respective first device and its sensor, respectively, which would be older and not yet acknowledged. I.e. whenever a first data set is received by the server system, one can be sure that the sensing data at the internet and at the server, respectively, are complete; i.e. there is no gap in the set of received sensing data.

This represents a very advantageous way of handling sensing data, because it makes possible to produce, e.g., at the server system, a final (terminal), unambiguous statement regarding the product integrity up to a very early point in time.

Referring to "old" or "older" sensing data and to "new" or "newer" sensing data more precisely means that the sensing time associated with the sensing data is earlier and later, respectively.

The first aspect can be accomplished in a first device, in particular as follows:

For each of the transmissions applies, that, at the time of preparing the respective transmission:
- (a) each of the one or more sensing data to be comprised in the first data set to be transmitted in the respective transmission has a transmission status which is set to a value different from "acknowledged"; and
- (b) all of the one or more sensing data comprised in the first data set to be transmitted in the respective transmission constitute a series of sensing data, the series comprising:
   - (b1) sensing data referred to as first sensing data, which are sensing data associated with a sensing time which is referred to as first sensing time, which is earliest of all the sensing times which are associated with any one of the sensing data which are stored in the first storage unit and which have a transmission status which is set to a value different from "acknowledged";
   - (b2) sensing data referred to as last sensing data, which are sensing data associated with a sensing time which is referred to as last sensing time, which is latest of all the sensing times associated with any one of the sensing data of the series; and
   - (b3) any sensing data stored in the first storage unit, which are associated with a sensing time which is identical to or later than the first sensing time and which is identical to or earlier than the last sensing time.

In other words, the first device can furthermore be configured to accomplish the preparing of the transmissions in such a way that for each of the transmissions applies, at the time of preparing the respective transmission: the features (a), (b), (b1), (b2) and (b3) as above.

This can be viewed as describing how those sensing data to be included in a transmission are selected. Feature (a) ensures that sensing data which have been acknowledged already are not sent again. This reduces network traffic. Feature (b1) ensures that the series of sensing data to be included in the transmission includes the oldest not-yet acknowledged sensing data. Thus, a gap at old sensing data is avoided. Feature (b2) basically defines the newest sensing data which are to be included in a transmission. By feature (b3) is ensured that there is no gap between the oldest and the newest sensing data in the series to be transmitted. Thus, feature (b3) can, in brief, be understood to ensure that the transmitted series is a time-complete series, i.e. a consecutive series (with respect to the sensing times). By feature (b) is excluded that further sensing data would be included in the transmision, which would not be included in the series. I.e. the first data set can be devoid further sensing data, more clearly, devoid any further sensing data stored in the first storage unit. However, all the sensing data are stored in the first storage unit, as described further above.

Thus, all sensing data included in a transmission form a time-complete series of sensing data, starting with the oldest not-acknowledged sensing data.

For example, in the trivial case that only one sensing data is transmitted, that sensing data are simultaneously the first sensing data (cf. (b1)) and the last sensing data (cf. (b2)), and it will be the oldest sensing data in the first storage unit (cf. (b) and (b1)) which are not yet acknowledged (transmission status set to a value different from "acknowledged") (cf. (a)).

If the only values the transmission status can assume, is "ready" and "acknowledged", the phrase "which is set to a value different from "acknowledged"" in features (a) and (b1) can be replaced by "which is set to "ready"". Further below, another status ("sent") is introduced. In that case: If the only values the transmission status can assume, is "ready", "sent" and "acknowledged", the phrase "which is set to a value different from "acknowledged"" in features (a) and (b1) can be replaced by "which is set to "ready" or is set to "sent"".

In order to reduce network traffic, further refinements can be applied. In particular, when a maximum transmission size is defined in a protocol of the first communication network, the first device can be furthermore configured
- to select, for each of the transmissions, the last sensing data such that the respective series of sensing data comprises as many sensing data as possible (in other words: comprises a maximum number of sensing data), so that a size of the respective transmission is identical to or smaller than the maximum transmission size.

In other words, the size of each transmission is made use of as far as possible. As many sensing data (and associated time data) as possible are included in each transmission.

E.g., from the maximum transmission size, a maximum size for the first data set can result, and within the maximum size for the first data set, a series of sensing data as large as possible is included (besides associated time data, transmission ID data and possibly further data).

For a furthermore refined sensing data handling, the first device can furthermore be configured
- to set the transmission status of sensing data to "sent" upon conducting a transmission via the first communication network comprising a first data set comprising the respective sensing data.

This way it can be distinguished, e.g., in the preparation of the transmissions, between sensing data with transmission status "sent", which have been sent already (at least once) and not yet acknowledged, and sensing data with transmission status "ready", which have not yet been sent.

This can be made use of in embodiments in which the first device is furthermore configured
- to prepare and subsequently conduct a further transmission upon detecting that there are sensing data stored in the first storage unit which have a transmission status which is set to "sent" and which fulfill a resend condition.

Upon detecting that the resend condition is fulfilled by at least one of the sensing data, a further transmission is triggered. This can be useful, e.g., when a second device having received the transmission (via the first communication network) is unable to communicate via the second communication network, e.g., for technical reasons, such as network problems or a defect of the second devices's second communication unit. Then, said second device cannot, for example, forward the first data set to, e.g., the server system. The further transmission may then, e.g., be received by a different second device - which hopefully functions correctly and can communicate via the second communication network and transmit the first data set, e.g., to the server system.

For example, the first device can be configured
- to prepare and subsequently conduct a further transmission upon detecting that sensing data are stored in the first storage unit which have a transmission status which is set to "sent" for a duration exceeding a preset waiting time.

Thus, if there are specific sensing data which are not acknowledged for a long time, more specifically for a time exceeding a threshold time (the preset waiting time), another transmission will be prepared and conducted - which comprises said specific sensing data (cf. the details above). This can improve the sensing data handling, e.g., because it can be avoided that a not-acknowledged transmission (including said specific sensing data) precludes a transmission of new sensing data: The specific (old, not-acknowledged) sensing data need to be included in transmissions and also all subsequent ones, without a gap (cf. above), such that a maximum transmission size can, at that point, preclude the preparation (and the subsequent conducting) of a transmission including very new sensing data.

When the time elapsed after setting the transmission status of sensing data to "sent" exceeds the preset waiting time, preparation (and conducting) of a further transmission can be triggered.

A possible way of implementing this, is to start, for each sent sensing data (or for each conducted transmission), a timer which triggers a further transmission after having reached the preset waiting time. After the further transmission has been accomplished, the timer can be reset and started anew.

Depending on circumstances, the preset waiting time can amount to a duration of, e.g., between 2 min and 6 hours.

The fulfillment of the resend condition and the exceeding a preset waiting time are two examples of trigger events triggering the preparation of a (further) transmission. Other possible trigger events can be, e.g., one of
- (new) sensing data are stored in the first storage unit (after a (new) sensing step has been accomplished);
- a preset time after last transmission has elapsed;
- the first device reconnects to the first communication network (after its connection to the first communication network had been interrupted);
- transmission status of all sensing data in a received transmission (received by the first device) has been set to "acknowledged".

What is herein described regarding the first aspect mostly refers to one sensor of a first device. This can be the only sensor of the first device. However, in some embodiments, each first device comprises one or more additional sensors (for sensing physical and/or environmental conditions to which the one or more products are assumed to be exposed), i.e. can comprise two or more sensors.

In that case, in one scenario, the described features apply separately to each sensor (and its respective sensing data). This can in particular mean that it is ensured separately for each sensor, that a time-complete series for sensing data from sensing steps carried out with the respective sensor is transmitted in each transmission (wherein not every transmission necessarily transmits sensing data from each of the sensors - in other words, the time-complete series can have zero members, i.e. comprise no data). The terminal, unambiguous statement regarding the integrity which can be made, can in this regard concern a specific one of the physical and/or environmental conditions only, namely the physical and/or environmental condition sensed by the respective sensor. It is thus, in that case, not possible to make a final judgement regarding the integrity of the monitored product(s) with respect to all sensed physical and/or environmental condition. Thus, only a limited picture can be gained in this scenario.

However, in another scenario, the allocation of sensing data to transmissions is not accomplished in the just described way separately for each sensor, but is accomplished for sensing data from two or more sensors of the first device. In particular, it can be accomplished for all sensing data, irrespective of the sensor (of the first device) by means of which the respective sensing step has been carried out.

With this scenario included in the description of the first device, the following applies:
- the first sensing unit comprises one or more sensors, each for sensing physical and/or environmental conditions to which the one or more products are assumed to be exposed; and
the first device is configured, for each of the one or more sensors,
- to repeatedly carry out a sensing step in which the respective physical and/or environmental conditions are sensed using the respective sensor.

The one or more sensors can be but need not be all the sensors comprised in the first device.

Thus, the selecting of sensing data for a transmission in this scenario can distinguish but does not need to distinguish sensing data with respect to the sensor by means of which they were obtained, but can treat all the sensing data equally.

A second aspect of the invention is related to the security and, in particular, to the tamper-proofness of the sensing data handling, more particularly of the acknowledgement handling.

More specifically, each of the acknowledgement data sets can be digitally signed, comprising a digital signature. And the first device can furthermore be configured to verify, for each received acknowledgement data set and with the aid of the digitial signature comprised in the respective received acknowledgement data set, an authenticity of the transmission ID data comprised in the respective received acknowledgement data set - and, where applicable, also an authenticity of further data comprised in the respective received acknowledgement data set.

It is thus proposed to increase security and in particular tamper-proofness by means of digitally signing each of the acknowledgement data sets. This can be accomplished by the server system.

For example, in order to digitally sign an acknowledgement data set, a hash function can be applied to data comprised therein, such as to the transmission ID data, and then, the resulting hash data (hashed data), are encrypted, such as by applying a digital key. The resulting (encrypted) data are the digital signature, which is included in the acknowledgement data set. For verification, the first device, e.g., can apply an appropriate digital key for decrypting the digital signature to gain the (original) hash data and compare these to hash data the first device obtains by applying the appropriate hash function to the data comprised in the received acknowledgement data set besides the digital signature, e.g., applying the appropriate hash function to the transmission ID data. If both hash data are identical, the authenticity, e.g., of the transmission ID data comprised in the respective received acknowledgement data set, is verified. Otherwise, fraud must be assumed.

By means of the transmission ID data, the first device, e.g., can identify those sensing data (linked to the transmission ID data) whose transmission status has to be set to "acknowledged" in response to reception (in the first device) of the acknowledgement data set.

In some embodiments, each of the acknowledgement data sets is encrypted, in particular in addition to being digitally signed. This can further improve security and in particular tamper-proofness.

In some embodiments, each of the acknowledgement data sets comprises, in addition,
- origin ID data identifying an origin of the respective acknowledgement data set; and
- destination ID data identifying a destination for the respective acknowledgement data set.

The origin is the item which has generated - and typically also (initially) transmitted - the respective acknowledgement data set. E.g., the origin can be the server system to which the sensing data were transmitted.

The destination is the device which is meant to (finally) receive the respective acknowledgement data set, i.e. typically the device, more particularly the first device, which has conducted the transmission which is being acknowledged by the respective acknowledgement data set.

E.g., the destination ID data can be identical to the first ID data of a first device which is the destination (for the acknowledgement data set).

Furthermore, the first device can be configured to verify, for each received acknowledgement data set and with the aid of the digitial signature comprised in the respective received acknowledgement data set, an authenticity
- of the origin ID data comprised in the respective received acknowledgement data set; and
- of the destination ID data comprised in the respective received acknowledgement data set.

This can be accomplished, e.g., as described above for the transmission ID data, such as including applying a hash function collectively to the transmission ID data, the origin ID data and the destination ID data.

By means of the origin ID data, the first device, e.g., can verify that the acknowledgement data set indeed originates from an expected origin, such as from a specific server system.

By means of the destination ID data, the first device, e.g., can verify that the acknowledgement data set is indeed meant to be received by it, as will be described here:
In some embodiments, each of the first data sets comprises first ID data identifying the first device, and the first device (D1) is furthermore configured
- to compare, for each received acknowledgement data set, the destination ID data comprised in the respective received acknowledgement data set to the first ID data; and
- to carry out the step of setting the transmission status of sensing data to "acknowledged" only if a result of the comparison is positive.

This way, the acknowledgement process can be made even more secure and tamper-proof.

A positive result of the comparison in other words means that the acknowledgement data set was destined for (meant to be received by) the first device. I.e. the first device has conducted the transmission which is being acknowledged by the acknowledgement data set.

It is noted that the transmission ID data can be unique within the system. However, it can be sufficient that the transmission ID data is unique separately for each first device (of the system).

This way, falsely setting the transmission status of sensing data to "acknowledged" can be effectively avoided. Therefore, the transmission ID data not necessarily need to be unique within a system with two or more first devices.

It is noted that the first ID data can in particular uniquely identify the respective first device, in particular at least within a system in which it is used. Being a unique identifier, the first ID data enable an unambiguous identification of each individial first device.

The first ID data, e.g., can be stored in the first storage unit.

Both, the first and the second aspect of the invention, can be separately embodied, but they can also be embodied together.

Turning to the system: The system for monitoring a set of products comprises
- one or more first devices as herein described, each of the first devices being associated with a respective subset of the products; and
- one or more second devices.

Each of the sensors is a sensor for sensing physical and/or environmental conditions to which the respective subset of products (associated with the first device comprising the respective sensor) is assumed to be exposed.

Furthermore, each of the second devices comprises one or more second functional units, the second functional units comprising
- a second communication unit for communicating via the first communication network and, in addition, for communicating via a second communication network.

Thus, each second device can have the ability to communicate via two different communication networks.

Each of the second devices is configured
- to receive via the first communication network one or more of the transmissions conducted by respective ones of the first devices via the first communication network.

Thus, e.g., each second device can receive first data sets from one or more different first devices.

Each of the second devices is furthermore configured
- to derive from the each of the so-received first data sets a respective second data set comprising
   - the transmission ID data;
   - the first ID data;
   - the one or more sensing data; and
   - for each of the one or more sensing data: the respective associated time data;
from the so-received first data set.

The deriving of the second data sets can be a trivial process: Each of the second data sets can be identical to the first data set from which it has been (identically) derived.

However, this is merely an option, but an option which can simplify or reduce the tasks to be carried out by the second devices. Generally (and typically), a second data set can differ from the first data set from which it has been derived, e.g., the second data set can comprise further data; or can comprise an altered version of data contained in the first data set.

Each of the second devices is furthermore configured
- to transmit each of the second data sets via the second communication network to the internet; e.g., to be received by a server system connected to the internet, e.g., for purposes herein described.

Thus, each second device can forward sensing data to the internet and to the server system, respectively.

Each of the second devices is furthermore configured
- to receive via the second communication network from the internet, e.g., from a server system connected to the internet, one or more third data sets, each of the third data sets comprising
   - transmission ID data; and
   - first ID data identifying one of the first devices;
derived from a second data set transmitted, by one of the second devices, via the second communication network to the internet.

Each of the third data sets can be a precursor of an acknowledgement data set, e.g., can be identical to one of the acknowledgement data sets.

Said transmission ID data can in particular identify one of the transmissions conducted by the first device identified by said first ID data.

It is important to note that the second device which receives the second data set (via the second communication network, from the internet, e.g., from the server system) can be different from the second device which has transmitted the second data set (via the second communication network to the internet, e.g., to the server system) from which the transmission ID data and the first ID data are derived. It is, however, possible that these two second device are identical (i.e. one and the same), but in case of technical problems of that second device, it can be very valuable to have the opportunity to use, for the receiving of the third data sets, a different second device. This strongly increases the robustness of the system.

In this regard, it can be provided that the system comprises at least two second devices, wherein each of the second devices is configured
- to receive via the second communication network from the internet, e.g., from a server system connected to the internet, one or more third data sets, each of the third data sets comprising
   - transmission ID data; and
   - first ID data identifying one of the first devices;
   derived from a second data set transmitted, by itself or transmitted by a different one of the second devices, via the second communication network to the internet.

Each of the second devices is furthermore configured
- to derive from the each of the so-received third data sets a respective acknowledgement data set comprising
   - the transmission ID data; and
   - the first ID data;
from the respective so-received third data set.

The deriving of the acknowledgement data set can be, but needs not be a trivial process.

Each of the second devices is furthermore configured
- to transmit each of the so-derived acknowledgement data sets via the first communication network to that respective one of the first devices which is identified by the first ID data comprised in the respective acknowledgement data sets.

Therein, the first ID data from the respective so-received third data set can be identical to the herein described destination ID data.

Thus, using the first ID data, the communication loop from a first device via a second device to the internet (and the server system, respectively) and back to the same first device via the same or a different second device can be closed.

And, using the transmission ID data in this communication loop makes possible to readily and unambiguously identify the sensing data transmitted in the (initial) transmission and the sensing data whose transmission status shall be set to "acknowledged" upon reception of the acknowledgement data set.

In some embodiments, the system comprises at least two second devices. In this case, the described increased robustness can be achievable.

In some embodiments, each second device comprises - as one of its funtional units - a sensing unit (second sensing unit) comprising one or more sensors for sensing physical and/or environmental conditions. More particularly, each of the second devices can be associated with a respective subset of the products, and the second sensing unit can comprise one or more sensors for sensing physical and/or environmental conditions to which the respective subset of products is assumed to be exposed. Each of the second devices can be associated with and, in particular, can also be located in proximity to the respective subset of the products.

In some other embodiments, each second device is devoid of a sensing unit comprising one or more sensors for sensing physical and/or environmental conditions.

Turning to the method: The method for monitoring a set of products comprises
- providing one or more first devices as herein described;
wherein each of the first devices is associated with a respective subset of the products and comprises first functional units, the first functional units comprising
- a first sensing unit comprising a sensor for sensing physical and/or environmental conditions; and
- a first storage unit for data storage;
by means of each of the first devices:
- repeatedly carrying out a sensing step in which the physical and/or environmental conditions to which the products of the respective associated subset of products are assumed to be exposed, are sensed by the aid of the sensor of the respective first device;
- for each of the sensing steps, storing in the first storage unit
   - sensing data indicative of a result of the respective sensing;
   - time data indicative of a sensing time associated with the respective sensing data; and
   - status data indicative of a transmission status of the respective sensing data;
- repeatedly: preparing and subsequently conducting a transmission via a first communication network, wherein in each of the transmissions, a first data set is transmitted via the first communication network, each of the first data sets comprising
   - transmission ID data identifying the respective transmission;
   - first ID data identifying the first device;
   - one or more of the sensing data; and
   - for each of the one or more sensing data: the respective associated time data;
- for each of the transmissions and upon conducting the respective transmission:
   - storing, in the first storage unit, the transmission ID data associated with the respective transmission; and
   - linking the stored transmission ID data to each of the respective sensing data comprised in the first data set transmitted in the respective transmission;
- receiving acknowledgement data sets via the first communication network, each of the acknowledgement data sets comprising transmission ID data identifying one of the transmissions conducted by the first device;
- setting the transmission status of sensing data to "ready" upon storing the respective sensing data in the first storage unit; and
- setting the transmission status of sensing data to "acknowledged" upon receiving an acknowledgement data set via the first communication network which comprises transmission ID data linked to the respective sensing data.

The method further comprises
- providing one or more second devices; and
the method further comprises, by means of each of the second devices:
- receiving via the first communication network one or more of the transmissions conducted by respective ones of the first devices via the first communication network;
- deriving from the each of the so-received first data sets a respective second data set comprising
   - the transmission ID data;
   - the first ID data;
   - the one or more sensing data; and
   - for each of the one or more sensing data: the respective associated time data;
   from the so-received first data set;
- transmitting each of the second data sets via a second communication network to the internet;
- receiving, via the second communication network, from the internet, one or more third data sets, each of the third data sets comprising
   - transmission ID data; and
   - first ID data identifying one of the first devices;
   from a second data set transmitted by one of the second devices via the second communication network to the internet;
- deriving from the each of the so-received third data sets a respective acknowledgement data set comprising
   - the transmission ID data; and
   - the first ID data;
   from the respective so-received third data set, and
- transmitting each of the so-derived acknowledgement data sets via the first communication network to that respective one of the first devices which is identified by the first ID data comprised in the respective acknowledgement data sets.

Therein, the first ID data from the respective so-received third data set can be identical to the herein described destination ID data.

The method can be carried out, e.g., using a system as described herein.

In accordance with the first aspect of the invention, the method can comprise that for each of the transmissions applies, that, at the time of preparing the respective transmission:
- each of the one or more sensing data to be comprised in the first data set to be transmitted in the respective transmission has a transmission status which is set to a value different from "acknowledged"; and
- all of the one or more sensing data comprised in the first data set to be transmitted in the respective transmission constitute a series of sensing data, the series comprising:
   - sensing data referred to as first sensing data, which are sensing data associated with a sensing time which is referred to as first sensing time, which is earliest of all the sensing times hich are associated with any one of the sensing data stored in the first storage unit and which have a transmission status which is set to a value different from "acknowledged";
   - sensing data referred to as last sensing data, which are sensing data associated with a sensing time which is referred to as last sensing time, which is latest of all the sensing times associated with any one of the sensing data of the series; and
   - any sensing data stored in the first storage unit, which are associated with a sensing time which is identical to or later than the first sensing time and which is identical to or earlier than the last sensing time.

In accordance with the second aspect of the invention, the method can comprise that each of the acknowledgement data sets is digitally signed, comprising a digital signature, the method further comprising, carried out by each of the first devices:
- verifying, for each received acknowledgement data set and with the aid of the digitial signature comprised in the respective received acknowledgement data set, an authenticity of the transmission ID data comprised in the respective received acknowledgement data set.

In accordance with explanations further above regarding the robustness of the system, the method, in some embodiments, comprises
- providing at least two second devices; and

the method further comprises, by means of a first one of the second devices:
   - receiving via the first communication network one or more of the transmissions conducted by respective ones of the first devices via the first communication network;
   - deriving from the each of the so-received first data sets a respective second data set comprising
      - the transmission ID data;
      - the first ID data;
      - the one or more sensing data; and
      - for each of the one or more sensing data: the respective associated time data;
      from the so-received first data set;
   - transmitting each of the second data sets via a second communication network to the internet;
the method further comprises, by means of a second one of the second devices:
   - receiving, via the second communication network, from the internet, one or more third data sets, each of the third data sets comprising
      - transmission ID data; and
      - first ID data identifying one of the first devices;
   from a second data set transmitted by the first one of the second devices via the second communication network to the internet; and
- deriving from the each of the so-received third data sets a respective acknowledgement data set comprising
   - the transmission ID data; and
   - the first ID data;
   from the respective so-received third data set;
- transmitting each of the so-derived acknowledgement data sets via the first communication network to that respective one of the first devices which is identified by the first ID data comprised in the respective acknowledgement data sets.

Therein, in a first situation, the first one of the second devices is identical to the second one of the second devices, and in a second situation, the first one of the second devices is different from the second one of the second devices. This means, depending on the situation, such as depending on circumstances, the first receiving / deriving / transmitting steps are carried out by the same or by a different second device as are the second receiving / deriving / transmitting steps. For example:
In the first situation, the second device which constitutes both, the first one and the second one of the second devices, is fully functional, and its communication connections via the first and via the second communication networks are functioning, too.

However, in the second situation, after having accomplished the first receiving / deriving / transmitting steps, the second device which constitutes the first one of the second devices has an impeding malfunction and/or its communication connection via the first communication network and/or its communication connection via the second communication network is not working. Accordingly, a different second devices accomplishes the second receiving / deriving / transmitting steps.

The method can further comprise, carried out by a server system which is connected to the internet and on which a server application running:
- receiving, by the server system, via a second communication network, the second data sets transmitted to the internet by the second devices;
- deriving from the each of the so-received second data sets a respective one of the one or more third data sets;
- transmitting each of the so-derived third data sets via the second communication network to one of the second devices.

E.g., the server application can be configured to accomplish these tasks.

The third data set can in particular comprise, as retrieved from the respective received second data set, the transmission ID data and the first ID data.

The physical and/or environmental conditions usually comprise one or more of
- temperature;
- humidity;
- acceleration;
- pressure, in particular ambient pressure;
- light intensity.

Correspondingly, each of the sensors (of any first device; of any second device) can be, e.g.,
- a temperature sensor;
- a humidity sensor;
- an acceleration sensor;
- a pressure sensor, in particular ambient pressure sensor; or
- a light intensity sensor.

The monitoring can in particular be accomplished during a time span, such as during a time of transport of the products from a location of departure to a destination; or during storage of the products in a storage location, e.g., from a time when the products enter the storage location to a time when the products leave the storage location.

In some embodiments, sensing steps are carried out periodically. E.g., temperature can be sensed, e.g., every 30 min.

In some embodiments, sensing steps are carried out aperiodically, such as in an event-based way, e.g., when an acceleration exceeds a threshold.

The sensing time in instances, can be considered a time stamp, more particularly a time stamp of the sensing, or a time stamp of the sensing data.

The sensing time can be, e.g., the time at which the sensing of the sensing step started or ended. Or it can be, e.g., the time at which the sensing data are determined. Or it can be, e.g., the time at which the sensing data are stored in the first storage unit.

The sensing can have any format, such as, e.g., the time in seconds, since beginning of the monitoring; or real time data such as year, month and day and time of the day.

The one or more products and the set of products, respectively, can be, e.g., a plurality of products which are stored together or a plurality of products which are transported together. The storing and transporting can, e.g., take place in a temperature-controlled environment, e.g., in a cooled environment.

The option of locating each first device in proximity to its respective associated subset of the products can lead to an improved accuracy of the assessment of the physical and/or environmental conditions to which the respective subset of the products is exposed, based on the result of the sensing.

The method can, in instances, also be considered a method for cold-chain monitoring of a set of products.

The products can in particular be perishable products, e.g temperature-sensitive products.

The products can be, e.g., temperature-sensitive and/or humidity-sensitive and/or shock-sensitive and/or light-sensitive.

The products can in particular be, e.g., pharmaceuticals or samples taken from a human body or from human body waste, or samples taken from an animal body or from animal body waste.

Each first device can be associated to one or more of the products forming the subset of the products. The physical and/or environmental conditions sensed by a first device can be attributed to the respective associated (or assigned) products. The respective subsets can be, but need not be, disjunct, i.e. they can be overlapping. A subset can comprise or or more of the products.

Typically, none of the subsets is identical to the monitored set of products.

In instances, the first devices can be considered tags.

In instances, the first devices can be considered data loggers.

In some embodiments, each first device comprises a housing and, more specifically, its first functional units can each be arranged in a fix position with respect to the housing - with the optional exception that a portion of the first sensing unit can be arranged externally to the housing. Said portion of the first sensing unit can comprise, e.g., one or more of the sensors (external sensors) of the first sensing unit.

In some embodiments, each second device comprises a housing and, more specifically, its second functional units can each be arranged in a fix position with respect to the housing - with the optional exception that a portion of a second sensing unit (if comprised in the second device) can be arranged externally to the housing. Said portion of the second sensing unit can comprise, e.g., one or more sensors of the second sensing unit.

The first devices and second devices are separate devices, e.g., each first device and also each second device have its own, separate housing.

The sensing data can more particularly comprise data which are derived from the sensed physical and/or environmental conditions, e.g., which are indicative of or are representing (are representative of) the sensed physical and/or environmental conditions.

The sensing data can comprise data which are equivalent to the results of the sensing.

The sensing data can comprise, e.g., raw sensing data or processed sensing data. In the latter case, the first devices can be capable of processing data, such as processing raw sensing data to obtain processed sensing data.

The transmitting of the second data sets via the second communication network to the internet can in particular comprise communicating via a TCP/IP protocol, i.e. via a protocol of the internet protocol suite (also known as the TCP/IP protocol suite). For example, it can comprise communicating using the Transmission Control Protocol (TCP), the User Datagram Protocol (UDP) or the Stream Control Transmission Protocol (SCTP). The second devices (and more particularly, the second communication units) can, accordingly, comprise means for communicating via a TCP/IP protocol; they can be configured to communicate (via a second communication network) using a TCP/IP protocol.

In contrast thereto, it can be provided that the transmissions conducted by the first devices in which the first data sets are transmitted, are accomplished without communicating via a TCP/IP protocol. It can be provided that the first devices (and more particularly, the first communication units) are devoid of means for communicating via a TCP/IP protocol. This can facilitate constructing the first devices in a relatively simple and cost-effective manner.

In some embodiments, each first device is devoid of a capability to communicate via a communication network different from the first communication network.

In some embodiments of the first device, the first communication network is the only communication network via which the first device is able to communicate.

Typically, a network protocol of the first communication network is different from a network protocol of the second communication network. E.g., communication via the first communication network can be carried out via a protocol according to a "Bluetooth" standard, such as according to a "Bluetooth Low Energy" (BLE) standard, whereas communication via the second communication network can be carried out using a TCP/IP protocol.

In some embodiments, the first communication network is a"Bluetooth" communication network, more particularly a "Bluetooth Low Energy" communication network.

Alternatives to the "Bluetooth" standard are, e.g., the "ZigBee" standard, the "LoRa" (Long Range) standard, the Sigfox standard, themioty standard, the "6LoWPAN" ("IPv6 over Low power Wireless Personal Area Network) standard - which by the way is not comprised in the TCP/IP protocol suite.

In some embodiments, the first and second communcation networks are wireless communication networks.

In some embodiments, the first communication network operates in a radio frequency range.

In some embodiments, the second communication network operates in a radio frequency range.

Usually both, the first and the second communication networks operate in a radio frequency range.

Network communication via a radio-frequency based communication network can make possible wireless communication at low energy consumption with sufficient data bandwidth and at sufficient range for the purpose, which in particular applies to the first communication network.

In some embodiments, the first communication network has a range which is smaller than a range of the second communication network.

Referring to "ranges" of the communication networks here, we do not refer, e.g., to free-field ranges theoretically achievable at a theoretical maximum emission power and maximum receiver sensitivity, but to free-field ranges achievable with the concrete first and second devices, and in particular at the actual emission powers and receiver sensitivities factually provided by the first and second devices.

In some embodiments, the first communication network has a range smaller than 50 m, in particular smaller than 20 m, more particularly smaller 10 m.

In some embodiments, the second communication network has a range of at least 50 m, in particular of at least 100 m, more particularly ot at least 400 m.

In some embodiments, the second communication network is a cellular network, in particular a mobile phone network.

In some embodiments, the second communication network operates according to a Wi-Fi standard.

The first storage unit can be, e.g., digital data storages, such as computer memory chips.

In some embodiments, each of the first devices comprises a first energy supply unit comprising a first energy storage, for providing electric energy; in particular for supplying the first functional units with electric energy.

In some embodiments, each of the second devices comprises a second energy supply unit comprising a second energy storage, for providing electric energy; in particular for supplying the one or more second functional units with electric energy.

The first energy storage can comprise, e.g., battery.

The second energy storage can comprise, e.g., battery.

In some embodiments, each of the second devices comprises a second energy supply unit comprising a rechargeable second energy storage, e.g., comprising a rechargeable battery.

In some embodiments, each of the first devices comprises a first energy supply unit comprising a non-rechargeable first energy storage, e.g., comprising a non-rechargeable battery. More particularly, for each of the first devices, all first energy storages of all of its first energy supply units are devoid of a rechargeable (first) energy storage.

In some embodiments, the first functional unit of each first device comprises a control unit, such as a microprocessor, in particular wherein the control unit operationally connected to the other first functional units for controlling these. E.g., this way, the first device can accomplish the tasks it is configured for, controlled by the control unit.

The server system can be, e.g., one or more interconnected computers, usually including one or more mass storage devices.

By the server system, the second data set and in particular the sensing data comprised therein may be stored and/or processed, such as, e.g., for determining whether or not the product can be assumed to be still intact or not. This way, the first devices can do with relatively little processing power, so that they can be simple and cost-effective devices.

Furthermore, we hereby disclose an unclaimed method for storing a set of products, which comprises monitoring the set of products according to a herein described method.

Furthermore, we hereby disclose an unclaimed method for shipping a set of products, which comprises monitoring the set of products according to a herein described method.

Furthermore, we hereby disclose an unclaimed shipping unit comprising a system as herein described. And we hereby disclose an unclaimed shipping unit comprising one or more first devices as herein described. The shipping unit can further comprise the set of products, and more particularly each of the first devices can be positioned in proximity to the products of its associated subset.

Furthermore, we hereby disclose an unclaimed stock comprising a system as herein described. And we hereby disclose an unclaimed stock comprising one or more first devices as herein described. The stock can further comprise the set of products, and more particularly each of the first devices can be positioned in proximity to the products of its associated subset.

Note: When an item is described to be "configured" to carry out a step, this means that concrete measures have been taken which factually enable the item to carry out the step. For example, dedicated program code is implemented enabling the item to carry out the step when the program code is executed. Thus, this does not include, e.g., the mere suitability to (possibly) make the item carry out the step, as may be the case for a computer without a dedicated program code.

As will be readily understood, features mentioned herein with respect to a method can analogously apply for a described system as well. And, vice versa, features mentioned herein with respect to a system; device) can analogously apply for a described method as well. The achievable effects correspond to each other.

Accordingly, the invention comprises systems with features of corresponding methods according to the invention, and, vice versa, also methods with features of corresponding systems according to the invention.

Further embodiments and advantages emerge from the following description and the enclosed figures and from the dependent claims.

Below, the invention is described in more detail by means of examples and the included drawings. In the drawings, same reference symbols refer to same or analogous elements. The figures show schematically:
- Fig. 1: a schematic illustration of a system for monitoring a set of products;
- Fig. 2: another schematic illustration of a system for monitoring a set of products, highlighting a first and a second device of the system;
- Fig. 3: a schematic illustration of a system and of a method for monitoring a set of products, highlighting the transmissions and transmitted data;
- Fig. 4: a schematic illustration of an example of sensing data and time data in a first storage unit and their assignment to a transmission;
- Fig. 5: a schematic illustration of an example of interrelations between data in a first storage unit and different transmissions.

The described embodiments are meant as examples or for clarifying the invention and shall not limit the invention.

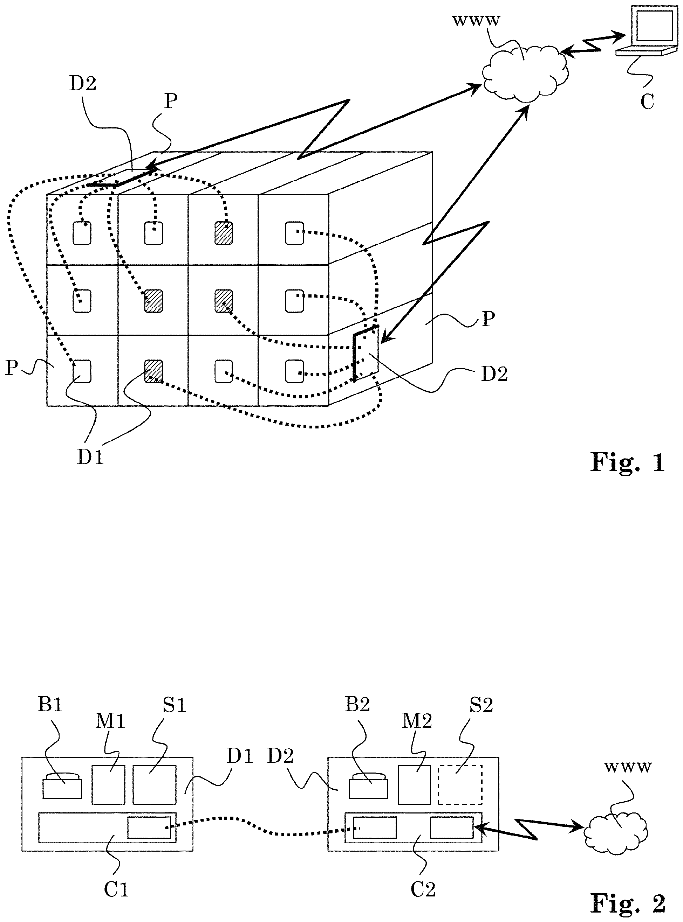

Fig. 1 shows a schematic illustration of a system for monitoring a set of products, and Fig. 2 shows another schematic illustration of a system for monitoring a set of products, e.g., of the system of Fig. 1, highlighting a first device D1 and a second device D2 of the system. Some of the products are labelled P in Fig. 1. It is also possible that each of the items labelled P in Fig. 1 comprises one or more products, such as a subset of products, e.g., a plurality vials containing a vaccine.

The system comprises one or more first devices D1 and one or more second devices D2. In Fig. 1, twelve first devices D1 and two second devices D2 are shown. Each first device D1 can communicate with one or more associated ones of the second devices D2 using a first communication network, as symbolized by the dotted lines. For example, the hatched first devices D1 may be able to communicate with both second devices D2 (not specifically illustrated in Fig, 1), e.g., because they are located within a communication range of both these second devices D2. Provided the possibility that a specific first device D1 can communicate, in principle (unless, e.g., they are too far distant from one another), with any of the second devices D2, the communication is quite robust, as, e.g., in case of a malfunction of one of the second devices D2 or of the loss of the connection to the internet www of one of the second devices D2, the first device D1 still can communicate with another second device D2.

The first and second devices D1, D2 comprise communication units C1 and C2 respectively, both enabling communicating via the first communication network, such as using a "Bluetooth Low Energy" standard. The communication units C2 of the second devices D2 enable communication using another communication network, providing a connection to the internet www, e.g., using a cellular communication network or a communication network according to a Wi-Fi standard. Each first device D1 can use one or more of the second devices D2 as a gateway to the internet www. In particular, the system can also comprise a server system C connected to the internet www, such that data from each first device D1 (or, rather, data derived from data from the first device D1) can be transmitted (via a second device D2) to the server system C.

The first and second devices D1, D2 can comprise an energy supply unit B1 and B2, respectively, such as a battery. In particular the energy supply unit B2 of the second devices D2 can comprise a rechargeable energy storage, such as a rechargeable battery.

The first and second devices D1, D2 can comprise storage units M1 and M2, respectively, for digital data storage, e.g., computer memory chips, and a digital processing unit such as a microprocessor, e.g. as a control unit - which is not shown in the figures.

The first devices D1 comprise a sensing unit S1 each, for sensing physical and/or environmental conditions, such as a temperature, in particular when the products P to be monitored are temperature-sensitive products.

Optionally, the second devices D2 can comprise a sensing unit S2 each, for sensing physical and/or environmental conditions, such as a temperature, in particular when the products P to be monitored are temperature-sensitive products.

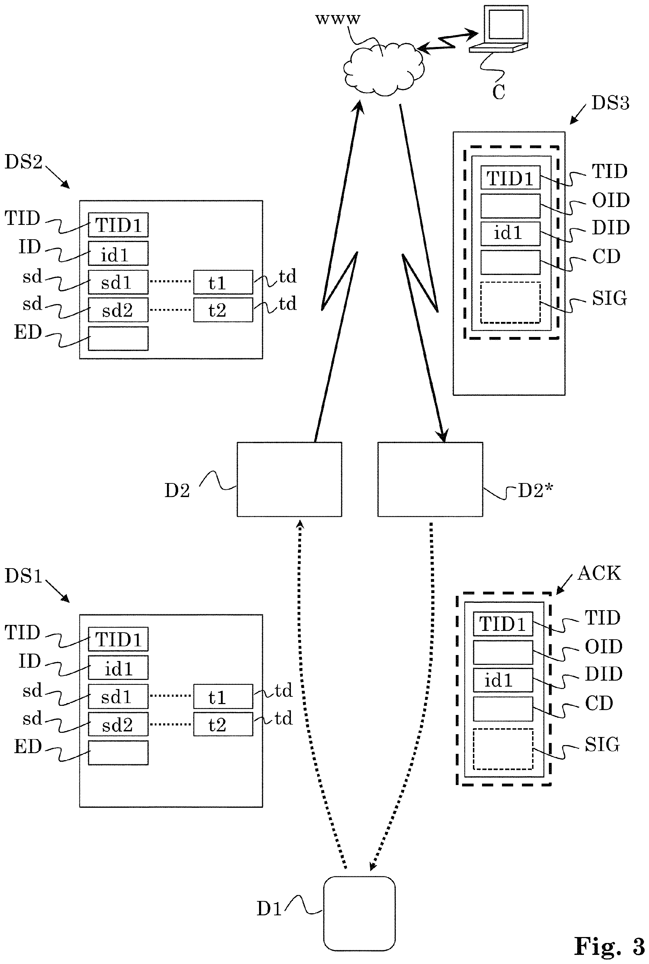

Fig. 3 is a schematic illustration of a system and of a method for monitoring a set of products, highlighting the transmissions and transmitted data. Fig. 3 focuses on and illustrates only a single first device D1 and two second devices D2, D2*, wherein these can be identical or can be different from one another.

Repeatedly, first device D1 prepares a transmission comprising a first data set D1 to be received, via the first communication network, by second device D2. Second device D2 thereupon derives from the first data set DS1 a second data set DS2 and transmits the second data set DS2, via the second communication network, to the internet www, more specifically to a server system C on which a server application is running.

The server system C thereupon derives from the second data set DS2 a third data set DS3 and transmits the third data set DS3, via the second communication network, to second device D2*. The server system C in addition can store and analyze data comprised in the second data set DS2, in particular the sensing data. Upon reception of the third data set DS3, second device D2* derives from the third data set DS3 a fourth data set referred to as acknowledement data set ACK and transmits the acknowledement data set ACK, via the first communication network, to the first device D1.

Repeatedly, first device D1 senses, by means of a sensor of its first sensing unit S1, a magnitude such as, e.g., a temperature. This way, sensing data sd are produced and stored in the first storage unit M1 which can be provided with time data td each indicative of a sensing time t, such as a time stamp, e.g., indicating at what time the respective sensing were taken. Upon storing sensing data sd in the first storage unit Ml, a transmission status of these is set to "ready". This indicates that these data may be selected for a transmission.

Repeatedly, first device D1 prepares a transmission comprising a first data set DS1. In the example illustrated in Fig. 3, two sensing data sd1, sd2 are comprised in the first data set, as well as the respective associated sensing times t1 and t2, respectively.

Further, the first data set DS1 comprises transmission ID data TID identifying the transmission, reading "TID1" in the illustration of Fig. 3; and first ID data identifying the first device, reading "id1" in the illustration of Fig. 3. In addition, error data ED may also be comprised in the transmission as well as optional further data (not illustrated).

After preparation of the transmission is completed, the transmission is conducted. Thereupon, the transmission status of the sensing data (in Fig. 3: sd1 and sd2) comprised in the transmission is set to "sent". This indicates that these data were comprised in at least one transmission.

The second data set DS2 is, in the illustrated example of Fig. 3, identical to first data set DS1, except that the optional further data are not comprised therein.

The third data set DS3 can be considered a precursor data set of the acknowledgement data set ACK. E.g., the two data sets DS3, ACK can be identical, e.g., except for optional additional data which may be comprised in the third data set DS3 while not being comprised in the acknowledgement data set ACK.

The acknowledgement data set ACK (and the third data set DS3) comprise:
- the transmission ID data TID, in order to identify which transmission is to be acknowledged;
- as destination ID data DID: the first ID data id ("id1") identifying the first device to receive the acknowledgement data set ACK, i.e. the first device having conducted the transmission with TID=TID1, i.e. the illustrated first device D1 with the first ID data of "id1";
- origin ID data OID identifying the server system C having generated the third data set DS3;
- optionally command data CD with commands to the first device identified by the destination ID data;
- a digital signature SIG (optional in the first aspect of the invention).

According to the second aspect of the invention, the acknowledgement data set ACK is digitally signed and thus comprises the digital signature data SIG, e.g., in a way as described further above.

Still in addition, for further security and tamper-proofness, the acknowledgement data set ACK can be digitally encrypted, as illustrated in Fig. 3 by the thick dashed rectangles.

By means of the destination ID data / first ID data in the acknowledgement data set ACK, first device D1, upon reception of thereof, can verify that the acknowledgement data set ACK is indeed meant to be received by this individual first device. And this way, the transmission ID data TID need not to be globally unique, but is it sufficient that the transmission ID data TID are unique individually for each first device only.

Upon reception of the acknowledgement data set ACK, the first device D1
- decrypts the acknowledgement data set ACK (in case it was encrypted);
- verifies the authenticity of the data comprised in the acknowledgement data set ACK by means of the digital signature SIG;
- verifies, by means of the destination ID data DID and its device ID data ID, that the destination of the the acknowledgement data set ACK is indeed the first device D1 itself; and
if the decryption and the verifications have been successful,
- set the transmission status of those sensing data (in Fig. 3: sd1 and sd2) which had been sent in the first data set DS1, as identified via the transmission ID data TID (TID1) received in the acknowledgement data set ACK, to "acknowledged". Only "acknowledged" sensing data need not (and shall not) be included in further transmissions anymore.

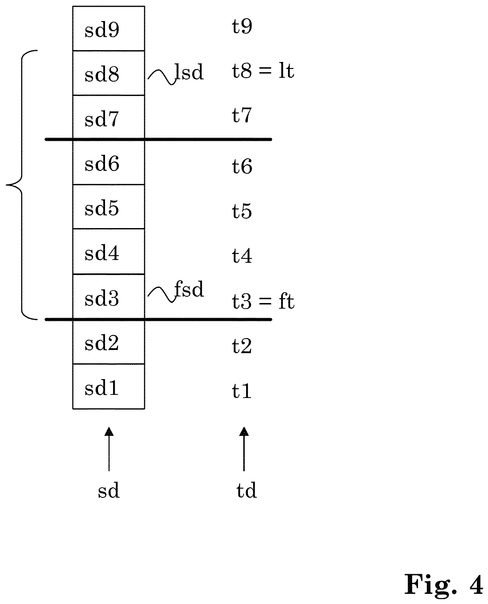

Fig. 4 is a schematic illustration of an example of sensing data sd and associated time data td in a first storage unit (cf. M1 in Fig. 2), and their assignment to a transmission, at the time of preparing the transmission. At that time, in the illustrated example, the sensing data below the lower thick line (sd1 and sd2) have been marked "acknowledged", the sensing data between the lower and the upper thick line (sd3, sd4, sd5 and sd6) have been marked "sent", and the sensing data above the upper thick line (sd7, sd8 and sd9) have been marked "ready". Writing being "marked" here is a short way of referring to value of the associated transmission status.

According to the first aspect of the invention, the "oldest" sensing data (first sensing data fsd) marked "sent", i.e. sensing data sd3, associated with the "oldest" sensing time (first sensing time ft, i.e. t3) will be included in the transmission, as well as "subsequent" sensing data (present in the first storated unit), i.e. sensing data with a "newer" sensing time, such that, with respect to their associated sensing times, no sensing data are missing. Thus, a consecutive series of sensing data (and their associated sensing times) is included in the first data set to be included in the transmission. How long the series of sensing data is, i.e. which sensing data (last sensing data lsd) shall be the newest ones (i.e, being associated with the latest sensing time lt) can depend, e.g., on the maximum transmission size defined in a protocol of the first communication network while including as many sensing data in each transmission as possible.

In the illustrated example of Fig. 4, the transmitted series of sensing data and the first data set, respectively, comprises sensing data sd3 through sd8, as illustrated by the brace.

This way of accomplising the preparation of the transmissions and this way of selecting sensing data to be included in a first data set DS1 for a transmission, respectively, can ensure that, upon reception of a second data set DS2 at the server system C, there will be no "older" sensing data taken with the sensor of the respective first device which have not yet been received by the server system C. Accordingly, at a very early point in time, a complete picture of the sensing data and thus also of the integrity (intactness / soundness) as inferable from the sensed physical and/or environmental conditions, can be gained. It is effectively avoided that after the reception of a second data set DS2, another second data set is received by the server system C which, for the first time, reports older sensing data.

Thus, already very early, it can be definitively determined from the sensing data received by the server system C whether or not products associated with the respective first device D1 are considered intact.

Furthermore, it can be provided that sensing data marked "sent" are automatically sent another time when a preset waiting time has elapsed. In other words, a further transmission is prepared and conducted when it is detected that there are sensing data in the first storage unit which have been marked "sent" for at least a preset waiting time. These data will be the oldest sensing data marked "sent" and thus will be the first sensing data fsd. This way, it can be avoided that temporary technical problems in the system, e.g.,, impeding the communication, lead to overlong delays between the sensing and the reception of corresponding sensing data at the server system C.

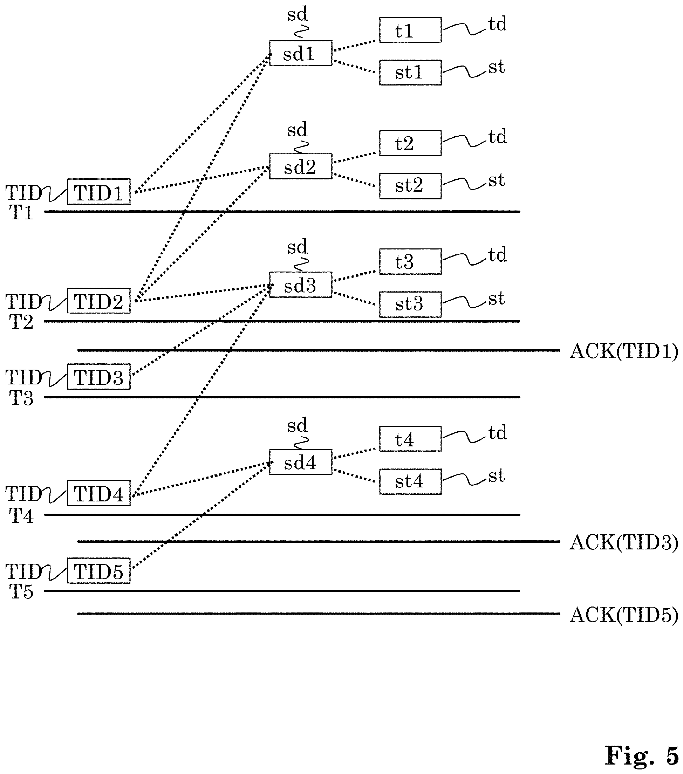

Fig. 5 is a schematic illustration of an example of interrelations between data (sensing data sd; time data td; transmission status data st) in a first storage unit and different transmissions. In the left portion of Fig. 5, the transmissions (T1 to T5) are symbolized, at thick horizontal lines; in the middle portion of Fig. 5, said data in the first storage unit are symbolized; and in the right portion of Fig. 5, the acknowledgement data sets are symbolized, at thick horizontal lines. Dashed lines in Fig. 5 symbolize an association and link, respectively. An approximate time line runs from top to bottom.

While usually, an acknowledgement data set arrives at the first device having transmitted the transmission which is acknowledged very rapidly after the transmission was conducted. The example of Fig. 5, however, stresses the robustness of the method even in case of strong technical problems leading to communication problemes, e.g., delays.

Firstly (time t1), sensing data sd1 are taken and stored, with transmission status st1 set to "ready".

Because of a technical problem, no transmission can be prepared soon afterwards.

Then (time t2), sensing data sd2 are taken and stored, with transmission status st2 set to "ready".

Then, a first transmission T1 is prepared and conducted, having transmission ID data TID1.

Sensing data sd1 and sd2 are included in transmission T1; their transmission status is set to "sent".

Because of some technical problem, no acknowledgement data set for T1 is yet received by the first device.

Then (time t3), sensing data sd3 are taken and stored, with transmission status st3 set to "ready".

Then, a second transmission T2 is prepared and conducted, having transmission ID data TID2.

Sensing data sd1, sd2 and sd3 are included, in transmission T2, because none of them is yet marked "acknowledged". Also the transmission status of sensing data sd3 is set to "sent".

In the illustrated example, no acknowledgement data set for T2 is will be received by the first device, because of some technical problem, such as a complete drain of the battery of the second device which has received transmission T2 immediately after the reception of transmission T2.

Then, an acknowledgement data set is received by the first device, acknowledging the reception by the server system of transmission T1, having the transmission ID data TID1.

Transmission status st1 and also st2 is set to "acknowledged". Transmission status st3 remains "sent".

Then, a third transmission T3 is prepared and conducted, having transmission ID data TID3.

Only sensing data sd3 are included in transmission T3, because it is the only one which is not yet marked "acknowledged". Transmission status st3 remains "sent".

Then (time t4), sensing data sd4 are taken and stored, with transmission status st4 set to "ready".

Then, a fourth transmission T4 is prepared and conducted, having transmission ID data T ID4.

Sensing data sd3 and sd4 are included, in transmission T4. Transmission status st4 is set to "sent".

Because of a technical problem, transmission T4 takes place before an acknowledgement for transmission T3 could reach the first device.

Then, an acknowledgement data set is received by the first device, acknowledging the reception by the server system of transmission T3, having the transmission ID data TID3.

Transmission status st3 is set to "acknowledged". Transmission status st4 remains set to "sent".

Then, a fifth transmission T5 is prepared and conducted, having transmission ID data TID5. Transmission status st4 remains set to "sent". This transmission may be prepared and conducted at this point, e.g., because the transmission status st4 has been set to "sent" for too long, i.e. for more than a preset waiting time.

Then, an acknowledgement data set is received by the first device, acknowledging the reception by the server system of transmission T5, having the transmission ID data TID5.

Transmission status st4 is set to "acknowledged".

As will have become clear, a relatively robust and secure way of handling and safeguarding sensitive data in the monitoring of products can be realized by the described methods and system. And a presence of highly significant or valuable data at an early point in time at the server system can be ensured.

## Claims

1. System for monitoring a set of products (P), the system comprising
- one or more first devices (D1) for monitoring one or more products (P), each of the first devices (D1) being associated with a respective subset of the set of products (P); and
- one or more second devices (D2);
each of the first devices (D1) comprising first functional units, the first functional units comprising
- a first sensing unit (S1) comprising a sensor for sensing physical and/or environmental conditions to which the respective subset of products associated with the first device comprising the respective sensor is assumed to be exposed;
- a first storage unit (M1) for data storage; and
- a first communication unit (C1) for communicating via a first communication network;
wherein each of the first devices (D1) is configured
- to repeatedly carry out a sensing step in which said physical and/or environmental conditions are sensed using the respective sensor; and
- for each of the sensing steps, to store in the first storage unit (M1)
- sensing data (sd) indicative of a result of the respective sensing;
- time data (td) indicative of a sensing time (t) associated with the respective sensing data (sd); and
- status data (st) indicative of a transmission status of the respective sensing data;
wherein each of the first devices (D1) is furthermore configured to, repeatedly, prepare and subsequently conduct a transmission via the first communication network, wherein in each of the transmissions, a first data set (DS1) is transmitted via the first communication network, each of the first data sets (DS1) comprising
- transmission ID data (TID) identifying the respective transmission;
- first ID data (ID) identifying the first device (D1);
- one or more of the sensing data (sd); and
- for each of the one or more sensing data (sd): the respective associated time data (td);
wherein each of the first devices (D1) is furthermore configured to store in the first storage unit (M1), for each of the transmissions and upon conducting the respective transmission, the transmission ID data (TID) associated with the respective transmission, and to link the stored transmission ID data (TID) to each of the respective sensing data (sd) comprised in the first data set (DS1) transmitted in the respective transmission;
wherein each of the first devices (D1) is furthermore configured
- to receive acknowledgement data sets (ACK) via the first communication network, each of the acknowledgement data sets (ACK) comprising transmission ID data (TID) identifying one of the transmissions conducted by the first device (D1);
wherein each of the first devices (D1) is furthermore configured
- to set the transmission status of sensing data (sd) to "ready" upon storing the respective sensing data (sd) in the first storage unit (Ml); and
- to set the transmission status of sensing data to "acknowledged" upon receiving an acknowledgement data set (ACK) via the first communication network which comprises transmission ID data (TID) linked to the respective sensing data (sd);
each of the second devices (D2) comprising one or more second functional units, the second functional units comprising
- a second communication unit (C2) for communicating via the first communication network and, in addition, for communicating via a second communication network;
wherein each of the second devices (D2) is configured
- to receive via the first communication network one or more of the transmissions conducted by respective ones of the first devices (D1) via the first communication network;
- to derive from the each of the so-received first data sets (DS1) a respective second data set (DS2) comprising
- the transmission ID data;
- the first ID data (ID);
- the one or more sensing data (sd); and
- for each of the one or more sensing data (sd): the respective associated time data (td);
from the so-received first data set (DS1);
- to transmit each of the second data sets (DS2) via the second communication network to the internet (www);
**characterized in that** each of the second devices (D2) is configured
- to receive via the second communication network from the internet (www) one or more third data sets (DS3), each of the third data sets (DS3) comprising
- transmission ID data (TID); and
- first ID data (ID) identifying one of the first devices (D1);
derived from a second data set (DS2) transmitted, by one of the second devices (D2), via the second communication network to the internet (www); and
- to derive from the each of the so-received third data sets (DS3) a respective acknowledgement data set (ACK) comprising
- the transmission ID data (TID); and
- the first ID data (ID);
from the respective so-received third data set (DS3);
- to transmit each of the so-derived acknowledgement data sets (ACK) via the first communication network to that respective one of the first devices (D1) which is identified by the first ID data (ID) comprised in the respective acknowledgement data sets (ACK).

2. The system according to claim 1, wherein for each of the transmissions applies, that, at the time of preparing the respective transmission:
- each of the one or more sensing data (sd) to be comprised in the first data set (DS1) to be transmitted in the respective transmission has a transmission status which is set to a value different from "acknowledged"; and
- all of the one or more sensing data (sd) comprised in the first data set (DS1) to be transmitted in the respective transmission constitute a series of sensing data (sd), the series comprising:
- sensing data (sd) referred to as first sensing data (fsd), which are sensing data (sd) associated with a sensing time (t) which is referred to as first sensing time (ft), which is earliest of all the sensing times (t) which are associated with any one of the sensing data (sd) stored in the first storage unit (M1) and which have a transmission status which is set to a value different from "acknowledged";
- sensing data (sd) referred to as last sensing data (lsd), which are sensing data (sd) associated with a sensing time (t) which is referred to as last sensing time (lt), which is latest of all the sensing times (t) associated with any one of the sensing data (sd) of the series; and
- any sensing data (sd) stored in the first storage unit (M1), which are associated with a sensing time (t) which is identical to or later than the first sensing time (ft) and which is identical to or earlier than the last sensing time (lt).

3. The system according to claim 2, wherein a maximum transmission size is defined in a protocol of the first communication network, and wherein each of the first devices (D1) is furthermore configured
- to select, for each of the transmissions, the last sensing data (lsd) such that the respective series of sensing data (sd) comprises as many sensing data as possible, so that a size of the respective transmission is identical to or smaller than the maximum transmission size.

4. The system according to one of claims 1 to 3, wherein each of the first devices (D1) is furthermore configured
- to set the transmission status of sensing data (sd) to "sent" upon conducting a transmission via the first communication network comprising a first data set (DS1) comprising the respective sensing data (sd).

5. The system according to claim 4, wherein each of the first devices (D1) is furthermore configured
- to prepare and subsequently conduct a further transmission upon detecting that there are sensing data (sd) stored in the first storage unit (M1) which have a transmission status which is set to "sent" for a duration exceeding a preset waiting time.

6. The system according to one of claims 1 to 5, comprising at least two second devices, wherein each of the second devices is configured
- to receive via the second communication network from the internet one or more third data sets, each of the third data sets comprising
- transmission ID data; and
- first ID data identifying one of the first devices;
derived from a second data set transmitted, by itself or transmitted by a different one of the second devices, via the second communication network to the internet.

7. Method for monitoring a set of products (P), the method comprising
- providing one or more first devices (D1), each of the first devices (D1) being associated with a respective subset of the products (P) and comprising first functional units, the first functional units comprising
- a first sensing unit (S1) comprising a sensor for sensing physical and/or environmental conditions; and
- a first storage unit (M1) for data storage;
by means of each of the first devices (D1):
- repeatedly carrying out a sensing step in which the physical and/or environmental conditions to which the products (P) of the respective associated subset of products (P) are assumed to be exposed, are sensed by the aid of the sensor of the respective first device (D1);
- for each of the sensing steps, storing in the first storage unit (M1)
- sensing data (sd) indicative of a result of the respective sensing;
- time data (td) indicative of a sensing time (t) associated with the respective sensing data (sd); and
- status data (st) indicative of a transmission status of the respective sensing data;
- repeatedly: preparing and subsequently conducting a transmission via a first communication network, wherein in each of the transmissions, a first data set (DS1) is transmitted via the first communication network, each of the first data sets (DS1) comprising
- transmission ID data (TID) identifying the respective transmission;
- first ID data (ID) identifying the first device (D1);
- one or more of the sensing data (sd); and
- for each of the one or more sensing data (sd): the respective associated time data (td);
- for each of the transmissions and upon conducting the respective transmission:
- storing, in the first storage unit (M1), the transmission ID data (TID) associated with the respective transmission; and
- linking the stored transmission ID data (TID) to each of the respective sensing data (sd) comprised in the first data set (DS1) transmitted in the respective transmission;
- receiving acknowledgement data sets (ACK) via the first communication network, each of the acknowledgement data sets (ACK) comprising transmission ID data (TID) identifying one of the transmissions conducted by the first device (D1);
- setting the transmission status of sensing data (sd) to "ready" upon storing the respective sensing data (sd) in the first storage unit (M1); and
- setting the transmission status of sensing data (sd) to "acknowledged" upon receiving an acknowledgement data set (ACK) via the first communication network which comprises transmission ID data (TID) linked to the respective sensing data (sd);
the method further comprising
- providing one or more second devices (D2);
the method further comprising, by means of each of the second devices (D2):
- receiving via the first communication network one or more of the transmissions conducted by respective ones of the first devices (D1) via the first communication network;
- deriving from the each of the so-received first data sets (DS1) a respective second data set (DS2) comprising
- the transmission ID data (TID);
- the first ID data (ID);
- the one or more sensing data (sd); and
- for each of the one or more sensing data (sd): the respective associated time data (td);
from the so-received first data set (DS1);
- transmitting each of the second data sets (DS2) via a second communication network to the internet (www);
**characterized in that** the method further comprises, by means of each of the second devices (D2):
- receiving, via the second communication network, from the internet (www), one or more third data sets (DS3), each of the third data sets (DS3) comprising
- transmission ID data (TID); and
- first ID data (ID) identifying one of the first devices (D1);
from a second data set (DS2) transmitted by one of the second devices (D2) via the second communication network to the internet (www);
- deriving from the each of the so-received third data sets (DS3) a respective acknowledgement data set (ACK) comprising
- the transmission ID data (TID); and
- the first ID data (ID);
from the respective so-received third data set (DS3); and
- transmitting each of the so-derived acknowledgement data sets (ACK) via the first communication network to that respective one of the first devices (D1) which is identified by the first ID data (ID) comprised in the respective acknowledgement data sets (ACK).

8. The method according to claim 7, wherein for each of the transmissions applies, that, at the time of preparing the respective transmission:
- each of the one or more sensing data (sd) to be comprised in the first data set (DS1) to be transmitted in the respective transmission has a transmission status which is set to a value different from "acknowledged"; and
- all of the one or more sensing data (sd) comprised in the first data set (DS1) to be transmitted in the respective transmission constitute a series of sensing data (sd), the series comprising:
- sensing data (sd) referred to as first sensing data (fsd), which are sensing data (sd) associated with a sensing time (t) which is referred to as first sensing time (ft), which is earliest of all the sensing times (t) which are associated with any one of the sensing data (sd) stored in the first storage unit (M1) and which have a transmission status which is set to a value different from "acknowledged";
- sensing data (sd) referred to as last sensing data (lsd), which are sensing data (sd) associated with a sensing time (t) which is referred to as last sensing time (lt), which is latest of all the sensing times (t) associated with any one of the sensing data (sd) of the series; and
- any sensing data (sd) stored in the first storage unit (M1), which are associated with a sensing time (t) which is identical to or later than the first sensing time (ft) and which is identical to or earlier than the last sensing time (It).

9. The method according to claim 8, wherein a maximum transmission size is defined in a protocol of the first communication network, the method comprising, carried out by each of the first devices (D1):
- selecting, for each of the transmissions, the last sensing data (lsd) such that the respective series of sensing data (sd) comprises as many sensing data as possible so that a size of the respective transmission is identical to or smaller than the maximum transmission size.

10. The method according to one of claims 7 to 9, comprising, carried out by each of the first devices (D1):
- setting the transmission status of sensing data (sd) to "sent" upon conducting a transmission via the first communication network comprising a first data set (DS1) comprising the respective sensing data (sd); and
- preparing and conducting a further transmission upon detecting that sensing data (sd) are stored in the first storage unit (M1) which have a transmission status which is set to "sent" for a duration exceeding a preset waiting time.

11. The method according to one of claims 7 to 10, wherein each of the acknowledgement data sets (ACK) is digitally signed, comprising a digital signature (SIG), the method further comprising, carried out by each of the first devices (D1):
- verifying, for each received acknowledgement data set (ACK) and with the aid of the digitial signature (SIG) comprised in the respective received acknowledgement data set (ACK), an authenticity of the transmission ID data (TID) comprised in the respective received acknowledgement data set (ACK).

12. The method according to claim 11, wherein each of the acknowledgement data sets (ACK) comprises, in addition,
- origin ID data (OID) identifying an origin of the respective acknowledgement data set (ACK); and
- destination ID data (DID) identifying a destination for the respective acknowledgement data set (ACK), and
wherein each of the first data sets (DS1) comprises first ID data (ID) identifying the first device, wherein the method furthermore comprises, carried out by each of the first devices (D1):
- verifying, for each received acknowledgement data set (ACK) and with the aid of the digitial signature (SIG) comprised in the respective received acknowledgement data set (ACK), an authenticity
- of the origin ID data (TID) comprised in the respective received acknowledgement data set (ACK); and
- of the destination ID data (TID) comprised in the respective received acknowledgement data set (ACK);
- comparing, for each received acknowledgement data set (ACK), the destination ID data (TID) comprised in the respective received acknowledgement data set (ACK) to the first ID data (ID); and
- carrying out the step of setting the transmission status of sensing data (sd) to "acknowledged" only if a result of the comparison is positive.

13. The method according to one of claims 7-12, further comprising, carried out by a server system (C) which is connected to the internet (www) and on which a server application running:
- receiving, by the server system (C), via a second communication network, the second data sets (DS2) transmitted to the internet (www) by the second devices (D2);
- deriving from the each of the so-received second data sets (DS2) a respective one of the one or more third data sets (DS3); and
- transmitting each of the so-derived third data sets (DS3) via the second communication network to one of the second devices (D2).

## Patentansprüche

1. System zur Überwachung einer Gruppe von Produkten (P), das aufweist
- eine oder mehrere erste Vorrichtungen (D1) zum Überwachen eines oder mehrerer Produkte (P), wobei jede der ersten Vorrichtungen (D1) mit einer jeweiligen Untergruppe der Gruppe von Produkten (P) assoziiert ist; und
- eine oder mehrere zweite Vorrichtungen (D2);
wobei jede der ersten Vorrichtungen (D1) erste Funktionseinheiten aufweist, wobei die ersten Funktionseinheiten umfassen
- eine erste Sensoreinheit (S1), die einen Sensor zum Erfassen von physikalischen und/oder Umgebungsbedingungen aufweist, von den anzunehmen ist, dass diejenige Untergruppe von Produkten (P) diesen ausgesetzt ist, die mit derjenigen ersten Vorrichtung (D1) assoziiert ist, die den jeweiligen Sensor aufweist;
- eine erste Speichereinheit (M1) zur Datenspeicherung; und
- eine erste Kommunikationseinheit (C1) zum Kommunizieren über ein erstes Kommunikationsnetzwerk;
wobei jede der ersten Vorrichtungen (D1) konfiguriert ist,
- wiederholt einen Erfassungsschritt auszuführen, in welchem die genannten physikalischen und/oder Umgebungsbedingungen unter Verwendung des jeweiligen Sensors erfasst werden; und
- für jeden der Erfassungsschritte, in der ersten Speichereinheit (M1) zu speichern
- Erfassungsdaten (sd), die ein Resultat der jeweiligen Erfassung anzeigen;
- Zeitdaten (td), die eine Erfassungszeit (t) anzeigen, die mit den jeweiligen Erfassungsdaten (sd) assoziiert ist; und
- Statusdaten (st), die einen Übertragungsstatus der jeweiligen Erfassungsdaten anzeigen;
wobei jede der ersten Vorrichtungen (D1) desweiteren so konfiguriert ist, dass sie wiederholt eine Übertragung über das erste Kommunikationsnetzwerk vorbereitet und anschliessend ausführt, wobei bei jeder der Übertragungen ein erster Datensatz (DS1) über das erste Kommunikationsnetzwerk übertragen wird, wobei jeder der ersten Datensätze (DS1) aufweist
- Übertragungs-ID-Daten (TID), die die jeweilige Übertragung kennzeichnen;
- erste ID-Daten (ID), die die erste Vorrichtung (D1) kennzeichnen;
- ein oder mehrere der Erfassungsdaten (sd); und
- für jede der einen oder mehreren Erfassungsdaten (sd): die jeweiligen assoziierten Zeitdaten (td);
wobei jede der ersten Vorrichtungen (D1) desweiteren konfiguriert ist, für jede der Übertragungen und bei der Ausführung der jeweiligen Übertragung in der ersten Speichereinheit (M1) die mit der entsprechenden Übertragung assoziierten Übertragungs-ID-Daten (TID) zu speichern und die gespeicherten Übertragungs-ID-Daten (TID) mit jeden derjenigen Erfassungsdaten (sd) zu verknüpfen, die in dem in der entsprechechenden Übertragung übertragenen ersten Datensatz (DS1) enthalten sind;
wobei jede der ersten Vorrichtungen (D1) desweiteren konfiguriert ist,
- über das erste Kommunikationsnetz Bestätigungsdatensätze (ACK) zu empfangen, wobei jeder der Bestätigungsdatensätze (ACK) Übertragungs-ID-Daten (TID) aufweist, die eine der von der ersten Vorrichtung (D1) durchgeführten Übertragungen kennzeichnen;
wobei jede der ersten Vorrichtungen (D1) desweiteren konfiguriert ist,
- den Übertragungsstatus von Erfassungsdaten (sd) beim Speichern der entsprechenden Erfassungsdaten (sd) in der ersten Speichereinheit (M1) auf "bereit" zu setzen; und
- den Übertragungsstatus von Erfassungsdaten auf "bestätigt" zu setzen beim Empfangen des Bestätigungsdatensatzes (ACK) über das erste Kommunikationsnetzwerk, der die mit den jeweiligen Erfassungsdaten (sd) verknüpften Übertragungs-ID-Daten (TID) aufweist;
wobei jede der zweiten Vorrichtungen (D2) eine oder mehrere zweite Funktionseinheiten aufweist, wobei die zweiten Funktionseinheiten aufweisen
- eine zweite Kommunikationseinheit (C2) zum Kommunizieren über das erste Kommunikationsnetzwerk und, zusätzlich, zum Kommunizieren über ein zweites Kommunikationsnetzwerk;
wobei jede der zweiten Vorrichtungen (D2) konfiguriert ist,
- über das erste Kommunikationsnetzwerk eine oder mehrere der Übertragungen zu empfangen, die von entsprechenden der ersten Vorrichtungen (D1) über das erste Kommunikationsnetzwerk ausgeführt werden;
- aus jedem der so empfangenen ersten Datensätze (DS1) einen entsprechenden zweiten Datensatz (DS2) abzuleiten, der aufweist
- die Übertragungs-ID-Daten;
- die ersten ID-Daten (ID);
- die einen oder mehreren Erfassungsdaten (sd); und
- für jede der einen oder mehreren Erfassungsdaten (sd): die jeweils assoziierten Zeitdaten (td);
aus dem so empfangenen ersten Datensatz (DS1);
- jeden der zweiten Datensätze (DS2) über das zweite Kommunikationsnetzwerk an das Internet (www) zu übertragen;
**dadurch gekennzeichnet, dass** jede der zweiten Vorrichtungen (D2) konfiguriert ist,
- über das zweite Kommunikationsnetzwerk aus dem Internet (www) einen oder mehrere dritte Datensätze (DS3) zu empfangen, wobei jeder der dritten Datensätze (DS3) aufweist
- Übertragungs-ID-Daten (TID); und
- erste ID-Daten (ID), die eine der ersten Vorrichtungen (D1) kennzeichnen;
abgeleitet von einem von einer der zweiten Vorrichtungen (D2) über das zweite Kommunikationsnetzwerk an das Internet (www) übertragenen zweiten Datensatz (DS2); und
- aus jedem der so empfangenen dritten Datensätze (DS3) einen jeweiligen Bestätigungsdatensatz (ACK) abzuleiten, der umfasst
- die Übertragungs-ID-Daten (TID); und
- die ersten ID-Daten (ID);
aus dem jeweiligen so empfangenen dritten Datensatz (DS3);
- jeden der so abgeleiteten Bestätigungsdatensätze (ACK) über das erste Kommunikationsnetzwerk an dasjenige jeweilige der ersten Vorrichtungen (D1) zu übertragen, das durch die in den jeweiligen Bestätigungsdatensätzen (ACK) enthaltenen ersten ID-Daten (ID) gekennzeichnet ist.

2. Das System nach Anspruch 1, wobei für jede der Übertragungen gilt, dass zur Zeit der Vorbereitung der jeweiligen Übertragung:
- jede der einen oder mehreren Erfassungsdaten (sd), die von dem bei der jeweiligen Übertragung zu übertragenden ersten Datensatz (DS1) aufzuweisen sind, einen Übertragungsstatus aufweist, der auf einen von "acknowledged" verschiedenen Wert gesetzt ist; und
- alle der in dem ersten Datensatz (DS1) enthaltenen und bei der jeweiligen Übertragung zu übertragenden Erfassungsdaten (sd) eine Serie von Erfassungsdaten (sd) bilden, wobei die Serie umfasst:
- als erste Erfassungsdaten (fsd) bezeichnete Erfassungsdaten (sd), bei denen es sich um Erfassungsdaten (sd) handelt, die mit einer Erfassungszeit (t) assoziiert sind, die als erste Erfassungszeit (ft) bezeichnet wird, bei der es sich um die früheste aller Erfassungszeiten (t) handelt, die mit irgendwelchen der in der ersten Speichereinheit (M1) gespeicherten Erfassungsdaten (sd) assoziiert sind und einen Übertragungsstatus aufweisen, der auf einen anderen Wert als "bestätigt" gesetzt ist;
- als letzte Erfassungsdaten (lsd) bezeichnete Erfassungsdaten (sd), bei denen es sich um Erfassungsdaten (sd) handelt, die mit einer Erfassungszeit (t) assoziiert sind, die als letzte Erfassungszeit (lt) bezeichnet wird, bei der es sich um die späteste von allen Erfassungszeiten (t) handelt, die mit irgendwelchen der Erfassungsdaten (sd) der Serie assoziiert sind; und
- alle in der ersten Speichereinheit (M1) gespeicherten Erfassungsdaten (sd), die mit einer Erfassungszeit (t) assoziiert sind, die mit der ersten Erfassungszeit (ft) identisch oder später als diese ist und der mit der letzten Erfassungszeit (lt) identisch oder früher als diese ist.

3. Das System nach Anspruch 2, wobei in einem Protokoll des ersten Kommunikationsnetzwerkes eine maximale Übertragungsgröße definiert ist, und wobei jede der ersten Vorrichtungen (D1) desweiteren konfiguriert ist,
- für jede der Übertragungen die letzten Erfassungsdaten (lsd) so auszuwählen, dass die jeweilige Serie von Erfassungsdaten (sd) möglichst viele Erfassungsdaten umfasst, so dass eine Größe der jeweiligen Übertragung gleich oder kleiner ist als die maximale Übertragungsgrösse.

4. Das System nach einem der Ansprüche 1 bis 3, wobei jede der ersten Vorrichtungen (D1) desweiteren konfiguriert ist,
- den Übertragungsstatus der Erfassungsdaten (sd) auf "gesendet" zu setzen bei der Ausführung einer Übertragung über das erste Kommunikationsnetzwerk, die einen ersten Datensatz (DS1) aufweist, der die entsprechenden Erfassungsdaten (sd) aufweist.

5. Das System nach Anspruch 4, wobei jede der ersten Vorrichtungen (D1) desweiteren konfiguriert ist,
- eine weitere Übertragung vorzubereiten und anschliessend durchzuführen, bei Feststellung, dass in der ersten Speichereinheit (M1) Erfassungsdaten (sd) gespeichert sind, die einen Übertragungsstatus haben, der für eine Dauer, die eine voreingestellte Wartezeit überschreitet, auf "gesendet" gesetzt ist.

6. Das System nach einem der Ansprüche 1 bis 5, das mindestens zwei zweite Vorrichtungen aufweist, wobei jede der zweiten Vorrichtungen konfiguriert ist
- über das zweite Kommunikationsnetzwerk aus dem Internet einen oder mehrere dritte Datensätze zu empfangen, wobei jeder der dritten Datensätze aufweist
- Übertragungs-ID-Daten; und
- erste ID-Daten, die eine der ersten Vorrichtungen kennzeichnen;
abgeleitet von einem von ihr selbst oder von einer anderen der zweiten Vorrichtungen über das zweite Kommunikationsnetzwerk an das Internet übertragenen zweiten Datensatz.

7. Verfahren zur Überwachung einer Gruppe von Produkten (P), aufweisend
- Bereitstellen einer oder mehrerer erster Vorrichtungen (D1), wobei jede der ersten Vorrichtungen (D1) mit einer jeweiligen Untergruppe der Produkte (P) assoziiert ist und erste Funktionseinheiten aufweist, wobei die ersten Funktionseinheiten umfassen
- eine erste Sensoreinheit (S1), die einen Sensor zum Erfassen von physikalischen und/oder Umgebungsbedingungen aufweist; und
- eine erste Speichereinheit (M1) zur Datenspeicherung;
mittels jeder der ersten Vorrichtungen (D1):
- wiederholtes Durchführen eines Erfassungsschritts, in dem die physikalischen und/oder Umgebungsbedingungen, von den anzunehmen ist, dass die Produkte der entsprechenden assoziierten Untergruppe von Produkten (P) diesen ausgesetzt sind, mit Hilfe des Sensors der jeweiligen ersten Vorrichtung (D1) erfasst werden;
- für jeden der Erfassungsschritte: Speichern in der ersten Speichereinheit (M1) von
- Erfassungsdaten (sd), die ein Resultat der jeweiligen Erfassung kennzeichnen;
- Zeitdaten (td), die eine Erfassungszeit (t) anzeigen, die mit den jeweiligen Erfassungsdaten (sd) assoziiert ist; und
- Statusdaten (st), die einen Übertragungsstatus der jeweiligen Erfassungsdaten anzeigen;
- wiederholt: Vorbereitung und anschliessende Ausführung einer Übertragung über ein erstes Kommunikationsnetzwerk, wobei bei jeder der Übertragungen ein erster Datensatz (DS1) über das erste Kommunikationsnetzwerk übertragen wird, wobei jeder der ersten Datensätze (DS1) aufweist
- Übertragungs-ID-Daten (TID), die die jeweilige Übertragung kennzeichnen;
- erste ID-Daten (ID), die die erste Vorrichtung (D1) kennzeichnen;
- ein oder mehrere der Erfassungsdaten (sd); und
- für jede der einen oder mehreren Erfassungsdaten (sd): die jeweiligen assoziierten Zeitdaten (td);
- für jede der Übertragungen und bei der Ausführung der jeweiligen Übertragung:
- Speichern der Übertragungs-ID-Daten (TID), die mit der jeweiligen Übertragung assoziiert sind, in der ersten Speichereinheit (M1); und
- Verknüpfen der gespeicherten Übertragungs-ID-Daten (TID) mit jeden derjenigen Erfassungsdaten (sd), die in dem in der entsprechechenden Übertragung übertragenen ersten Datensatz (DS1) enthalten sind;
- Empfangen von Bestätigungsdatensätzen (ACK) über das erste Kommunikationsnetzwerk, wobei jeder der Bestätigungsdatensätze (ACK) Übertragungs-ID-Daten (TID) aufweist, die eine der von der ersten Vorrichtung (D1) durchgeführten Übertragungen kennzeichnen;
- Setzen des Übertragungsstatus der Erfassungsdaten (sd) auf "bereit" beim Speichern der jeweiligen Erfassungsdaten (sd) in der ersten Speichereinheit (M1); und
- Setzen des Übertragungsstatus der Erfassungsdaten (sd) auf "bestätigt" beim Empfangen des Bestätigungsdatensatzes (ACK) über das erste Kommunikationsnetzwerk, der die mit den jeweiligen Erfassungsdaten (sd) verknüpften Übertragungs-ID-Daten (TID) aufweist;
wobei das Verfahren weiter aufweist
- Bereitstellen einer oder mehrerer zweiter Vorrichtungen (D2);
wobei das Verfahren desweiteren aufweist, mittels jeder der zweiten Vorrichtungen (D2):
- Empfangen einer oder mehrerer der Übertragungen über das erste Kommunikationsnetzwerk, die von jeweiligen ersten Vorrichtungen (D1) über das erste Kommunikationsnetzwerk ausgeführt werden;
- Ableiten eines jeweiligen zweiten Datensatzes (DS2) von jedem der so empfangenen ersten Datensätze (DS1), umfassend
- die Übertragungs-ID-Daten (TID);
- die ersten ID-Daten (ID);
- die einen oder mehreren Erfassungsdaten (sd); und
- für jede der einen oder mehreren Erfassungsdaten (sd): die jeweils assoziierten Zeitdaten (td);
aus dem so empfangenen ersten Datensatz (DS1);
- Übermitteln jedes der zweiten Datensätze (DS2) über ein zweites Kommunikationsnetzwerk an das Internet (www);
**dadurch gekennzeichnet, dass** das Verfahren desweiteren aufweist, mittels jeder der zweiten Vorrichtungen (D2):
- Empfangen eines oder mehrerer dritter Datensätze (DS3) über das zweite Kommunikationsnetzwerk aus dem Internet (www), wobei jeder der dritten Datensätze (DS3) aufweist
- Übertragungs-ID-Daten (TID); und
- erste ID-Daten (ID), die eine der ersten Vorrichtungen (D1) kennzeichnen;
von einem von einer der zweiten Vorrichtungen (D2) über das zweite Kommunikationsnetzwerk an das Internet (www) übertragenen zweiten Datensatz (DS2);
- Ableiten eines entsprechenden Bestätigungsdatensatzes (ACK) aus jedem der so empfangenen dritten Datensätze (DS3), der umfasst
- die Übertragungs-ID-Daten (TID); und
- die ersten ID-Daten (ID);
aus dem jeweiligen so empfangenen dritten Datensatz (DS3); und
- Übertragen jedes der so abgeleiteten Bestätigungsdatensätze (ACK) über das erste Kommunikationsnetzwerk an die entsprechende erste Vorrichtung (D1), die durch die in den jeweiligen Bestätigungsdatensätzen (ACK) enthaltenen ersten ID-Daten (ID) gekennzeichnet ist.

8. Verfahren nach Anspruch 7, wobei für jede der Übertragungen gilt, dass zur Zeit der Vorbereitung der jeweiligen Übertragung:
- jede der einen oder mehreren Erfassungsdaten (sd), die von dem bei der jeweiligen Übertragung zu übertragenden ersten Datensatz (DS1) aufzuweisen sind, einen Übertragungsstatus aufweist, der auf einen von "acknowledged" verschiedenen Wert gesetzt ist; und
- alle der in dem ersten Datensatz (DS1) enthaltenen und bei der jeweiligen Übertragung zu übertragenden Erfassungsdaten (sd) eine Serie von Erfassungsdaten (sd) bilden, wobei die Serie umfasst:
- als erste Erfassungsdaten (fsd) bezeichnete Erfassungsdaten (sd), bei denen es sich um Erfassungsdaten (sd) handelt, die mit einer Erfassungszeit (t) assoziiert sind, die als erste Erfassungszeit (ft) bezeichnet wird, bei der es sich um die früheste aller Erfassungszeiten (t) handelt, die mit irgendwelchen der in der ersten Speichereinheit (M1) gespeicherten Erfassungsdaten (sd) assoziiert sind und einen Übertragungsstatus aufweisen, der auf einen anderen Wert als "bestätigt" gesetzt ist;
- als letzte Erfassungsdaten (lsd) bezeichnete Erfassungsdaten (sd), bei denen es sich um Erfassungsdaten (sd) handelt, die mit einer Erfassungszeit (t) assoziiert sind, die als letzte Erfassungszeit (lt) bezeichnet wird, bei der es sich um die späteste von allen Erfassungszeiten (t) handelt, die mit irgendwelchen der Erfassungsdaten (sd) der Serie assoziiert sind; und
- alle in der ersten Speichereinheit (M1) gespeicherten Erfassungsdaten (sd), die mit einer Erfassungszeit (t) assoziiert sind, die mit der ersten Erfassungszeit (ft) identisch oder später als diese ist und der mit der letzten Erfassungszeit (lt) identisch oder früher als diese ist.

9. Verfahren nach Anspruch 8, wobei in einem Protokoll des ersten Kommunikationsnetzwerkes eine maximale Übertragungsgröße definiert ist, wobei das Verfahren, durchgeführt von jeder der ersten Vorrichtungen (D1), aufweist:
- Auswählen der letzten Erfassungsdaten (lsd), für jede der Übertragungen, so dass die jeweilige Serie von Erfassungsdaten (sd) möglichst viele Erfassungsdaten umfasst, so dass eine Größe der jeweiligen Übertragung gleich oder kleiner ist als die maximale Übertragungsgrösse.

10. Verfahren nach einem der Ansprüche 7 bis 9, umfassend, ausgeführt durch jede der ersten Vorrichtungen (D1):
- Setzen des Übertragungsstatus der Erfassungsdaten (sd) auf "gesendet" bei der Ausführung einer Übertragung über das erste Kommunikationsnetzwerk, die einen ersten Datensatz (DS1) aufweist, der die entsprechenden Erfassungsdaten (sd) aufweist; und
- Vorbereiten und Ausführen einer weitere Übertragung bei Feststellung, dass in der ersten Speichereinheit (M1) Erfassungsdaten (sd) gespeichert sind, die einen Übertragungsstatus haben, der für eine Dauer, die eine voreingestellte Wartezeit überschreitet, auf "gesendet" gesetzt ist.

11. Verfahren nach einem der Ansprüche 7 bis 10, wobei jeder der Bestätigungsdatensätze digital signiert ist und eine digitale Signatur (SIG) aufweist, wobei das Verfahren desweiteren umfasst, ausgeführt durch jede der ersten Vorrichtungen (D1):
- für jeden empfangenen Bestätigungsdatensatz (ACK) und mit Hilfe der in dem jeweiligen empfangenen Bestätigungsdatensatz (ACK) enthaltenen digitalen Signatur (SIG): Verifizieren einer Authentizität der in dem jeweiligen empfangenen Bestätigungsdatensatz (ACK) vorhandenen Übertragungs-ID-Daten (TID).

12. Verfahren nach Anspruch 11, wobei jeder der Bestätigungsdatensätze (ACK) zusätzlich
- Ursprungs-ID-Daten (OID), die einen Ursprung des jeweiligen Bestätigungsdatensatzes (ACK) kennzeichnen; und
- Ziel-ID-Daten (DID), die ein Ziel für den jeweiligen Bestätigungsdatensatz (ACK) kennzeichnen;
aufweist, und wobei jeder der ersten Datensätze (DS1) erste ID-Daten (ID) aufweist, die die erste Vorrichtung kennzeichen, wobei das Verfahren desweiteren umfasst, ausgeführt durch jede der ersten Vorrichtungen (D1):
- für jeden empfangenen Bestätigungsdatensatz (ACK) und mit Hilfe der in dem jeweiligen empfangenen Bestätigungsdatensatz (ACK) enthaltenen digitalen Signatur (SIG): Verifizieren einer Authentizität
- der in dem jeweiligen empfangenen Bestätigungsdatensatz (ACK) enthaltenen Herkunfts-ID-Daten (TID); und
- der in dem jeweiligen empfangenen Bestätigungsdatensatz (ACK) enthaltenen Ziel-ID-Daten (TID);
- für jeden empfangenen Bestätigungsdatensatz (ACK): Vergleichen der in dem jeweiligen empfangenen Bestätigungsdatensatz (ACK) vorhandenen Ziel-ID-Daten (TID) mit den ersten ID-Daten (ID); und
- Durchführung des Schritts des Setzens des Übertragungsstatus der Erfassungsdaten (sd) auf "bestätigt" nur, wenn ein Ergebnis des Vergleichens positiv ist.

13. Verfahren nach einem der Ansprüche 7-12, weiter aufweisend, ausgeführt von einem Serversystem (C), das mit dem Internet (www) verbunden ist und auf dem eine Serveranwendung läuft:
- Empfangen, durch das Serversystem (C), über ein zweites Kommunikationsnetzwerk, der von den zweiten Vorrichtungen (D2) an das Internet (www) übertragenen zweiten Datensätze (DS2);
- Ableiten von jedem der so empfangenen zweiten Datensätze (DS2) eines entsprechenden der einen oder mehreren dritten Datensätze (DS3); und
- Übertragung jedes der so abgeleiteten dritten Datensätze (DS3) über das zweite Kommunikationsnetzwerk an eine der zweiten Vorrichtungen (D2).

## Revendications

1. Système de surveillance d'un ensemble de produits (P), comprenant
- un ou plusieurs premiers dispositifs (D1) pour surveiller un ou plusieurs produits (P), chacun des premiers dispositifs (D1) étant associé à un sous-ensemble respectif de l'ensemble de produits (P) ; et
- un ou plusieurs deuxièmes dispositifs (D2) ;
chacun des premiers dispositifs (D1) comprend des premières unités fonctionnelles, les premières unités fonctionnelles comprenant
- une première unité de détection (S1) comprenant un détecteur pour détecter les conditions physiques et/ou environnementales auxquelles le sous-ensemble respectif de produits associés au premier dispositif comprenant le détecteur respectif est supposé être exposé ;
- une première unité de stockage (M1) pour le stockage des données ; et
- une première unité de communication (C1) pour communiquer via un premier réseau de communication ;
dans lequel chacun des premiers dispositifs (D1) est configuré
- à effectuer de manière répétée une étape de détection au cours de laquelle lesdites conditions physiques et/ou environnementales sont détectées à l'aide du détecteur respectif ; et
- pour chacune des étapes de détection, à stocker dans la première unité de stockage (M1)
- des données de détection (sd) indiquant un résultat de la détection respective ;
- des données temporelles (td) indiquant un temps de détection (t) associé aux données de détection respectives (sd) ; et
- des données d'état (st) indiquant l'état de transmission des données de détection respectives ;
dans lequel chacun des premiers dispositifs (D1) est en outre configuré pour, de manière répétée, préparer et effectuer ensuite une transmission via le premier réseau de communication, dans lequel, dans chacune des transmissions, un premier ensemble de données (DS1) est transmis via le premier réseau de communication, chacun des premiers ensembles de données (DS1) comprenant
- des données d'identification de la transmission (TID) identifiant la transmission respectif ;
- des premières données d'identification (ID) identifiant le premier dispositif (D1) ;
- une ou plusieurs données de détection (sd) ; et
- pour chacune des une ou plusieurs données de détection (sd) : les données temporelles associées (td) ;
dans lequel chacun des premiers dispositifs (D1) est en outre configuré à stocker dans la première unité de stockage (M1), pour chacune des transmissions et lors de l'exécution de la transmission respective, les données d'identification de la transmission (TID) associées à la transmission respective, et à relier les données d'identification de la transmission (TID) stockées à chacune des données de détection respectives (sd) comprises dans le premier ensemble de données (DS1) transmis dans la transmission respective ;
dans lequel chacun des premiers dispositifs (D1) est en outre configuré
- à recevoir des ensembles de données de confirmation (ACK) via le premier réseau de communication, chacun des ensembles de données de confirmation (ACK) comprenant des données d'identification de transmission (TID) identifiant une des transmissions effectuées par le premier dispositif (D1)
dans lequel chacun des premiers dispositifs (D1) est en outre configuré
- à régler l'état de transmission des données de détection (sd) sur "prêt" lors de stocker les données de détection respectives (sd) dans la première unité de stockage (M1) ; et
- à régler l'état de transmission des données de détection sur "confirmé" lors de récevoir un ensemble de données de confirmation (ACK) via le premier réseau de communication, qui comprend des données d'identification de transmission (TID) reliées aux données de détection respectives (sd) ;
chacun des deuxièmes dispositifs (D2) comprenant une ou plusieurs deuxièmes unités fonctionnelles, les deuxièmes unités fonctionnelles comprenant
- une deuxième unité de communication (C2) pour communiquer via le premier réseau de communication et, en outre, pour communiquer via un deuxième réseau de communication ;
dans lequel chacun des deuxièmes dispositifs (D2) est configuré
- à recevoir, via le premier réseau de communication, une ou plusieurs des transmissions effectuées par des premiers dispositifs (D1) respectifs via le premier réseau de communication ;
- dériver à partir de chacun des premiers ensembles de données reçus (DS1) un deuxième ensemble de données respectif (DS2) comprenant
- les données d'identification de la transmission ;
- les premières données d'identification (ID) ;
- les une ou plusieurs données de détection (sd) ; et
- pour chacune des données de détection (sd) : les données temporelles associées (td) respectifs ;
du premier ensemble de données ainsi reçu (DS1) ;
- transmettre chacun des deuxièmes ensembles de données (DS2) à l'internet (www) via le deuxième réseau de communication ;
**caractérisé en ce que** chacun des deuxièmes dispositifs (D2) est configuré
- à recevoir via le deuxième réseau de communication depuis l'internet (www) un ou plusieurs troisièmes ensembles de données (DS3), chacun des troisièmes ensembles de données (DS3) comprenant
- des données d'identification de la transmission (TID) ; et
- des premières données d'identification (ID) identifiant un des premiers dispositifs (D1) ;
dérivé d'un deuxième ensemble de données (DS2) transmis, par l'un des deuxièmes dispositifs (D2), via le deuxième réseau de communication vers l'internet (www) ; et
- à dériver de chacun des troisièmes ensembles de données (DS3) ainsi reçus un ensemble de données de confirmation respectif (ACK) comprenant
- les données d'identification de la transmission (TID) ; et
- les premières données d'identification (ID) ;
à partir du troisième ensemble de données respectif ainsi reçu (DS3) ;
- à transmettre chacun des ensembles de données de confirmation (ACK) ainsi dérivés via le premier réseau de communication à l'un des premiers dispositifs (D1) identifié par la première donnée d'identification (ID) comprise dans les ensembles de données de confirmation (ACK) respectifs.

2. Le système selon la revendication 1, dans lequel pour chacune des transmissions s'applique, qu'au moment de la préparation de la transmission respective :
- chacune des données de détection (sd) à inclure dans le premier ensemble de données (DS1) à transmettre dans la transmission respective a un état de transmission qui est réglé sur une valeur différente de "confirmé" ; et
- toutes les données de détection (sd) comprises dans le premier ensemble de données (DS1) à transmettre dans la transmission respective constituent une série de données de détection (sd), la série comprenant :
- des données de détection (sd) appelées premières données de détection (fsd), qui sont des données de détection (sd) associées à un temps de détection (t) appelé premier temps de détection (ft), qui est le plus précoce de tous les temps de détection (t) associés à une quelconque des données de détection (sd) stockées dans la première unité de stockage (M1) et dont l'état de transmission est réglé sur une valeur différente de "confirmé" ;
- des données de détection (sd) appelées dernières données de détection (lsd), qui sont des données de détection (sd) associées à un temps de détection (t) appelé dernier temps de détection (lt), qui est le plus tardif de tous les temps de détection (t) associés à l'une quelconque des données de détection (sd) de la série ; et
- toutes les données de détection (sd) stockées dans la première unité de stockage (M1), qui sont associées à un temps de détection (t) identique ou plus tardif que le premier temps de détection (ft) et identique ou plus précoce du dernier temps de détection (lt).

3. Le système selon la revendication 2, dans lequel une taille de transmission maximale est définie dans un protocole du premier réseau de communication, et dans lequel chacun des premiers dispositifs (D1) est en outre configuré
- à sélectionner, pour chacune des transmissions, les dernières données de détection (lsd) de manière à ce que la série respective de données de détection (sd) comprenne autant de données de détection que possible, de sorte que la taille de la transmission respective soit identique ou inférieure à la taille maximale de la transmission.

4. Le système selon l'une des revendications 1 à 3, dans lequel chacun des premiers dispositifs (D1) est en outre configuré
- à régler l'état de transmission des données de détection (sd) sur "envoyé" lors d'effectué une transmission via le premier réseau de communication comprenant un premier ensemble de données (DS1) comprenant les données de détection respectives (sd).

5. Le système selon la revendication 4, dans lequel chacun des premiers dispositifs (D1) est en outre configuré
- à préparer et effectuer ensuite une autre transmission lors de détecter qu'il y'a des données de détection (sd) stockées dans la première unité de stockage (M1) qui ont un état de transmission réglé sur "envoyé" pendant une durée supérieure à un temps d'attente prédéfini.

6. Le système selon l'une des revendications 1 à 5, comprenant au moins deux deuxièmes dispositifs, dans lequel chacun des deuxièmes dispositifs est configuré
- à recevoir via le deuxième réseau de communication de l'internet un ou plusieurs troisièmes ensembles de données, chacun des troisièmes ensembles de données comprenant
- des données d'identification de la transmission ; et
- des premières données d'identification identifiant l'un des premiers dispositifs ;
dérivé d'un deuxième ensemble de données transmis, par lui-même ou par un autre des deuxièmes dispositifs via le deuxième réseau de communication à l'internet.

7. Procédé pour surveiller un ensemble de produits (P), comprenant
- fournir un ou plusieurs premiers dispositifs (D1), chacun des premiers dispositifs (D1) étant associé à un sous-ensemble respectif des produits (P) et comprenant des premières unités fonctionnelles, les premières unités fonctionnelles comprenant
- une première unité de détection (S1) comprenant un détecteur pour détecter les conditions physiques et/ou environnementales ; et
- une première unité de stockage (M1) pour le stockage des données ;
au moyen de chacun des premiers dispositifs (D1) :
- effectuer de manière répétée une étape de détection au cours de laquelle les conditions physiques et/ou environnementales auxquelles les produits (P) du sous-ensemble respectif associé de produits (P) sont supposés être exposés, sont détectées à l'aide du détecteur du premier dispositif respectif (D1) ;
- pour chacune des étapes de détection, stocker dans la première unité de stockage (M1)
- données de détection (sd) indiquant un résultat de la détection respective ;
- données temporelles (td) indiquant un temps de détection (t) associé aux données de détection respectives (sd) ; et
- des données d'état (st) indiquant l'état de transmission des données de détection respectives ;
- de manière répétée : préparer et effectuer ensuite une transmission via un premier réseau de communication, dans laquelle, dans chacune des transmissions, un premier ensemble de données (DS1) est transmis via le premier réseau de communication, chacun des premiers ensembles de données (DS1) comprenant
- des données d'identification de la transmission (TID) identifiant la transmission respectif ;
- des premières données d'identification (ID) identifiant le premier dispositif (D1) ;
- une ou plusieurs données de détection (sd) ; et
- pour chacune des données de détection (sd) : les données temporelles associées (td) respectives;
- pour chacune des transmissions et lors de l'exécution de la transmission respective :
- stocker, dans la première unité de stockage (M1), les données d'identification de la transmission (TID) associées à la transmission respective ; et
- relier les données d'identification de transmission (TID) stockées à chacune des données de détection (sd) comprises dans le premier ensemble de données (DS1) transmis dans la transmission respective ;
- recevoir des ensembles de données de confirmation (ACK) via le premier réseau de communication, chacun des ensembles de données de confirmation (ACK) comprenant des données d'identification de transmission (TID) identifiant une des transmissions effectuées par le premier dispositif (D1)
- régler l'état de transmission des données de détection (sd) sur "prêt" lors de stocker les données de détection respectives (sd) dans la première unité de stockage (M1) ; et
- régler l'état de transmission des données de détection (sd) sur " confirmé " lors de récevoir un ensemble de données de confirmation (ACK) via le premier réseau de communication, qui comprend des données d'identification de transmission (TID) reliées aux données de détection respectives (sd) ;
le procédé comprenant en outre
- fournir un ou plusieurs deuxièmes dispositifs (D2) ;
le procédé comprenant en outre, au moyen de chacun des deuxièmes dispositifs (D2) :
- recevoir, via le premier réseau de communication, une ou plusieurs des transmissions effectuées par des premiers dispositifs (D1) respectifs via le premier réseau de communication ;
- dériver à partir de chacun des premiers ensembles de données reçus (DS1), un deuxième ensemble de données (DS2) respective comprenant
- les données d'identification de la transmission (TID) ;
- les premières données d'identification (ID) ;
- une ou plusieurs données de détection (sd) ; et
- pour chacune des données de détection (sd) : les données temporelles associées (td) respectifs ;
du premier ensemble de données ainsi reçu (DS1) ;
- transmettre chacun des deuxièmes ensembles de données (DS2) à l'internet (www) via un deuxième réseau de communication ;
**caractérisé en ce que** le procédé comprend en outre, au moyen de chacun des deuxièmes dispositifs (D2) :
- recevoir, via le deuxième réseau de communication, à partir de l'internet (www), un ou plusieurs troisièmes ensembles de données (DS3), chacun des troisièmes ensembles de données (DS3) comprenant
- des données d'identification de la transmission (TID) ; et
- des premières données d'identification (ID) identifiant un des premiers dispositifs (D1) ;
d'un deuxième ensemble de données (DS2) transmis par un des deuxièmes dispositifs (D2) via le deuxième réseau de communication vers l'internet (www) ;
- dériver de chacun des troisièmes ensembles de données (DS3) ainsi reçus un ensemble de données de confirmation (ACK) comprenant
- les données d'identification de la transmission (TID) ; et
- les premières données d'identification (ID) ;
à partir du troisième ensemble de données (DS3) ainsi reçu ; et
- transmettre chacun des ensembles de données de confirmation (ACK) ainsi dérivés via le premier réseau de communication à celui des premiers dispositifs (D1) qui est identifié par les premières données d'identification (ID) comprises dans les ensembles de données de confirmation respectifs (ACK).

8. Le procédé selon la revendication 7, dans laquelle pour chacune des transmissions s'applique, qu'au moment de la préparation de la transmission respective :
- chacune des données de détection (sd) à inclure dans le premier ensemble de données (DS1) à transmettre dans la transmission respective a un état de transmission qui est réglé sur une valeur différente de "confirmé" ; et
- toutes les données de détection (sd) comprises dans le premier ensemble de données (DS1) à transmettre dans la transmission respective constituent une série de données de détection (sd), la série comprenant :
- des données de détection (sd) appelées premières données de détection (fsd), qui sont des données de détection (sd) associées à un temps de détection (t) appelé premier temps de détection (ft), qui est le plus précoce de tous les temps de détection (t) associés à une quelconque des données de détection (sd) stockées dans la première unité de stockage (M1) et dont l'état de transmission est réglé sur une valeur différente de "confirmé" ;
- des données de détection (sd) appelées dernières données de détection (lsd), qui sont des données de détection (sd) associées à un temps de détection (t) appelé dernier temps de détection (lt), qui est le plus tardif de tous les temps de détection (t) associés à l'une quelconque des données de détection (sd) de la série; et
- toutes les données de détection (sd) stockées dans la première unité de stockage (M1), qui sont associées à un temps de détection (t) identique ou plus tardif que le premier temps de détection (ft) et identique ou plus précoce du dernier temps de détection (lt).

9. Le procédé selon la revendication 8, dans lequel une taille de transmission maximale est définie dans un protocole du premier réseau de communication, le procédé comprenant, exécuté par chacun des premiers dispositifs (D1) :
- sélectionner, pour chacune des transmissions, les dernières données de détection (lsd) de sorte que la série respective de données de détection (sd) comprenne autant de données de détection que possible, de sorte que la taille de la transmission respective soit identique ou inférieure à la taille maximale de la transmission.

10. Le procédé selon l'une des revendications 7 à 9, comprenant, effectué par chacun des premiers dispositifs (D1) :
- régler l'état de transmission des données de détection (sd) sur "envoyé" lors d' effectuer une transmission via le premier réseau de communication comprenant un premier ensemble de données (DS1) comprenant les données de détection respectives (sd) ; et
- préparer et effectuer une autre transmission lors de détecter qu'il y'a des données de détection (sd) stockées dans la première unité de stockage (M1) qui ont un état de transmission réglé sur "envoyé" pendant une durée supérieure à un temps d'attente prédéfini.

11. Le procédé selon l'une des revendications 7 à 10, dans lequel chaque ensemble de données de confirmation (ACK) est signé numériquement, comprenant une signature numérique (SIG), le procédé comprenant en outre, exécuté par chacun des premiers dispositifs (D1) :
- vérifier, pour chaque ensemble de données de confirmation (ACK) et à l'aide de la signature numérique (SIG) comprise dans l'ensemble de données de confirmation respectif (ACK), l'authenticité des données d'identification de transmission (TID) comprises dans l'ensemble de données de confirmation respectif (ACK).

12. Le procédé selon la revendication 11, dans laquelle chacun des ensembles de données de confirmation (ACK) comprend, en outre,
- données d'identification de l'origine (OID) identifiant l'origine de l'ensemble de données de confirmation (ACK) respectif ; et
- données d'identification de la destination (DID) identifiant une destination pour l'ensemble de données de confirmation (ACK) respectif ; et
dans lequel chacun des premiers ensembles de données (DS1) comprend des premières données d'identification (ID) identifiant le premier dispositif, dans lequel le procédé comprend en outre l'exécution par chacun des premiers dispositifs (D1) :
- vérifier, pour chaque ensemble de données de confirmation (ACK) et à l'aide de la signature numérique (SIG) comprise dans l'ensemble de données de confirmation respectif (ACK), une authenticité
- des données d'identification de l'origine (TID) comprises dans l'ensemble de données de confirmation (ACK) reçu respectif ; et
- des données d'identification de la destination (TID) comprises dans l'ensemble de données de confirmation (ACK) reçu respectif;
- comparer, pour chaque ensemble de données de confirmation (ACK), les données d'identification de destination (TID) comprises dans l'ensemble de données de confirmation respectif (ACK) aux premières données d'identification (ID) ; et
- effectuer l'étape de régler l'état de transmission des données de détection (sd) sur "confirmé" uniquement si le résultat de la comparaison est positif.

13. Le procédé selon l'une des revendications 7 à 12, comprenant en outre, effectué par un système serveur (C) connecté à l'Internet (www) et sur lequel s'exécute une application serveur :
- recevoir, par le système serveur (C), via un deuxième réseau de communication, les deuxièmes ensembles de données (DS2) transmis à l'internet (www) par les deuxièmes dispositifs (D2) ;
- dériver de chacun des deuxièmes ensembles de données ainsi reçus (DS2) un troisième ensemble de données (DS3) repectif des un ou plusieurs troisièmes ensembles de données (DS3) ; et
- transmettre chacun des troisièmes ensembles de données (DS3) ainsi dérivés via le deuxième réseau de communication à un des deuxièmes dispositifs (D2).
